# EUROPEAN PATENT APPLICATION

(11) **EP 4 432 453 A1**
(43) Date of publication of application: **18.09.2024**
(21) Application number: 22893248.9
(22) Date of filing: 11.11.2022
(51) Int. Cl.: H01M 50/533, H01M 50/538, H01M 10/04, B26D 1/08, B26D 1/11, B26D 7/08, B26D 1/00

(54) **CUTTING DEVICE, ELECTRODE ASSEMBLY, BATTERY CELL, ELECTRODE ASSEMBLY PROCESSING DEVICE, BATTERY PACK AND VEHICLE COMPRISING SAME, AND METHOD FOR MANUFACTURING BATTERY CELL**

(30) Priority: 11.11.2021 KR 20210155213; 29.06.2022 KR 20220079449
(71) Applicant: LG Energy Solution, Ltd., Seoul 07335 (KR)
(72) Inventor: KIM, Minwoo, Daejeon 34122 (KR); KIM, Do Gyun, Daejeon 34122 (KR)
(74) Representative: Goddar, Heinz J.
(86) International application number: PCT/KR2022/017697
(87) International publication number: WO 2023/085829

(57) **Abstract**

The present invention discloses a cutting device, an electrode assembly, a battery cell, an electrode assembly processing device, a battery pack and a vehicle comprising same, and a method for manufacturing the battery cell. The present invention provides a cutting device comprising: a first cutter portion (210) which forms a first cutting line (113) in an axial direction on the uncoated portion (15) extending in the axial direction, while moving in the axial direction of the electrode assembly (110), and separates a scheduled cutting portion (115a) and a scheduled forming portion (117a) on the basis of the first cutting line (113); and a second cutter portion (220) which forms a second cutting line (16a) in the circumferential direction with respect to the uncoated portion (15) wound in the circumferential direction, while moving in the radial direction of the electrode assembly (110), and forms a cut surface portion (115) in the uncoated portion (15) of the electrode assembly (110) by making the second cutting line (16a) be connected to the first cutting line (113) and thus cutting an outer portion (117b) of the scheduled forming portion (117a) and the scheduled cutting portion (115a) surrounded by the first cutting line (113) and the second cutting line (16a).

## Description

### [Technical Field]

This application claims the benefit of priority based on Korean Patent Applications Nos. 10-2021-0155213, filed on November 11, 2021 and 10-2022-0079449, filed on June 29, 2022, and the entire contents of the Korean patent applications are incorporated as a part of the present specification.

The present invention relates to a cutting device, an electrode assembly, a cylindrical battery cell, an electrode assembly manufacturing device, a battery pack and a vehicle including the electrode assembly, and a battery cell manufacturing method.

### [Background Art]

Generally, secondary batteries include positive electrodes, negative electrodes, and electrolytes and generate electrical energy using chemical reactions. Secondary batteries, which are highly applicable to each product group and have electrical characteristics such as high energy density, are universally applied to not only portable devices but also electric vehicles (EVs) or hybrid electric vehicles (HEVs) driven by electrical driving sources.

These secondary batteries have a primary advantage of being able to drastically reduce the use of fossil fuels. The secondary batteries have an advantage of not generating by-products due to the use of energy. For this reason, the secondary batteries are attracting attention as new energy sources for environment-friendliness and energy efficiency improvement.

Types of secondary batteries currently widely used include lithium ion batteries, lithium polymer batteries, nickel cadmium batteries, nickel hydrogen batteries, nickel zinc batteries, and the like. An operating voltage of a unit secondary battery cell, that is, a unit battery cell 100, ranges from 2.5 V to 4.5 V. Accordingly, when an output voltage that is higher than the above voltage is required, a plurality of battery cells may be connected in series to form a battery pack. Alternatively, a plurality of battery cells 100 may be connected in parallel to form a battery pack according to a charging/discharging capacity required for the battery pack. Thus, the number of battery cells included in the battery pack and a type of electrical connection may be variously set according to a required output voltage and/or the charging/discharging capacity.

Meanwhile, cylindrical battery cells, prismatic battery cells, and pouch-type battery cells are known as types of unit secondary battery cells. In the case of the cylindrical battery cell, a separator that is an insulator is interposed between a positive electrode and a negative electrode and wound to form an electrode assembly in the form of a jelly roll, and the electrode assembly is inserted into a battery can to form a battery. In addition, an electrode tab in the form of a strip may be connected to an uncoated portion of each of the positive electrode and the negative electrode. The electrode tab electrically connects between the electrode assembly and an electrode terminal exposed to the outside. For reference, a positive electrode terminal is a cap plate of a sealing body for sealing an opening of the battery can, and a negative electrode terminal is the battery can. However, according to the conventional cylindrical battery cell having the above-described structure, since a current is concentrated on the electrode tab in the form of a strip coupled to the uncoated portion of the positive electrode and/or the uncoated portion of the negative electrode, there is a problem in that resistance is high, a large amount of heat is generated, and current collection efficiency is not good. That is, a cross-sectional area of the electrode tab may be rapidly reduced to cause a bottleneck phenomenon in current flow.

Resistance and heat generation are not big issues for a small cylindrical battery cells with an 18650 or 21700 form factor. However, when the form factor is increased to apply the cylindrical battery cell to an EV, there may be a problem in that a large amount of heat is generated around the electrode tab during rapid charging so that the cylindrical battery cell may ignite.

To solve these problems, a cylindrical battery cell (referred to as a tab-less cylindrical battery cell) having a structure with improved current collection efficiency by designing the uncoated portion of the positive electrode and the uncoated portion of the negative electrode to be positioned at the top and bottom end of a jelly-roll type electrode assembly, respectively, and welding a current collecting plate to the uncoated portions is proposed.

Each of a first electrode sheet and a second electrode sheet has a structure in which a sheet-shaped current collector is coated with an active material and includes an uncoated portion at one long side in a winding direction.

The electrode assembly is manufactured by sequentially stacking and winding the first electrode sheet and the second electrode sheet together with two separators in one direction. In this case, the uncoated portions of the first electrode sheet and the second electrode sheet are disposed in opposite directions.

After the winding process, the uncoated portion of the first electrode sheet and the uncoated portion of the second electrode sheet are bent toward a core. Then, the current collecting plate is welded and coupled to each uncoated portion.

The uncoated portion of the positive electrode and the uncoated portion of the negative electrode are not coupled to separate electrode tabs, the current collecting plate is connected to an external electrode terminal, and a current path with a large cross-section is formed in a winding axis direction of the electrode assembly so that there is an advantage of reducing the resistance of the battery cell. This is because resistance is inversely proportional to a cross-sectional area of a path through which the current flows.

In a tab-less cylindrical battery cell, in order to improve the welding characteristics of the uncoated portion and the current collecting plate, it is necessary to bend the uncoated portion as flat as possible by applying a strong pressure to a welded point of the uncoated portion.

However, when the welded point of the uncoated portion is bent, a shape of the uncoated portion may be irregularly distorted and deformed. In this case, the deformed portion may come into contact with an opposite-polarity electrode plate to cause an internal short circuit or micro-cracks in the uncoated portion. In addition, as the uncoated portion adjacent to the core of the electrode assembly is bent, all or a substantial portion of a cavity in the core of the electrode assembly is occluded. In this case, a problem arises in an electrolyte injection process. That is, the cavity in the core of the electrode assembly is used as a passage for injecting the electrolyte. However, when the passage is occluded, electrolyte injection is difficult. In addition, an electrolyte injector interferes with the uncoated portion in the vicinity of the core in the process of being inserted into the cavity so that a problem in that the uncoated portion tears may occur.

In addition, the bent portion of the uncoated portion where the current collecting plate is welded should be layered in multiple layers and an empty space (gap) should not be present in the bent portion. Thus, sufficient weld strength may be obtained, and it is possible to prevent a laser from penetrating into the electrode assembly and damaging the separator or active material, even when an up-to-date technique such as laser welding is used.

A cylindrical secondary battery with an improved current collecting structure is disclosed in Korean Patent Laid-Open Application No. 2022-0023100 (published on March 2, 2022). In the cylindrical secondary battery, since a current collecting plate is welded to an end portion of an uncoated portion in a state of being in line contact with the end portion thereof, there is a problem in that a welding cross-sectional area between the current collecting plate and the uncoated portion is reduced due to a gap between the uncoated portions. Thus, electrical resistance in the welding cross-sectional area, which is a current path, may increase, a heating value of a battery cell may increase, and the probability of ignition may increase.

A secondary battery and a cylindrical lithium secondary battery are disclosed in Korean Patent Laid-Open Application No. 2016-0110610 (September 22, 2016). The secondary battery has a configuration in which a first current collecting plate is electrically connected to a first uncoated portion to be in direct contact therewith, and a second current collecting plate is electrically connected to a second uncoated portion to be in direct contact therewith. In addition, since the first current collecting plate and the second current collecting plate are connected to end portions of the first uncoated portion and the second uncoated portion, respectively, in a state of being in line contact therewith, there is a problem in that the contact cross-sectional area between the current collecting plate and the uncoated portion is reduced due to a gap between the uncoated portions. There is a limit to increasing the contact cross-sectional area.

### [Disclosure]

### [Technical Problem]

The present invention is directed to providing a cutting device capable of increasing a welding cross-sectional area between an electrode assembly and a current collecting plate to increase a current path, an electrode assembly, a battery cell, an electrode assembly manufacturing device, a battery pack and a vehicle including the same, and a battery cell manufacturing method.

The present invention is also directed to providing a cutting device capable of suppressing an increase in a heating value of a battery cell and reducing the possibility of ignition even when applied to a large-capacity battery cell, an electrode assembly, a battery cell, an electrode assembly manufacturing device, a battery pack and a vehicle including the same, and a battery cell manufacturing method.

The present invention is also directed to providing a cutting device capable of preventing a boundary between a forming portion and a cut surface from being deformed due to tearing or irregular distortion, an electrode assembly, a battery cell, an electrode assembly manufacturing device, a battery pack and a vehicle including the same, and a battery cell manufacturing method.

The present invention is also directed to providing a cutting device capable of reducing a heating value of a battery cell or significantly reducing the probability of an explosion, an electrode assembly, a battery cell, an electrode assembly manufacturing device, a battery pack and a vehicle including the same, and a battery cell manufacturing method.

The present invention is also directed to providing a cutting device capable of improving a cutting speed of an uncoated portion and smoothly forming a cut surface, an electrode assembly, a battery cell, an electrode assembly manufacturing device, a battery pack and a vehicle including the same, and a battery cell manufacturing method.

Technical objectives of the present invention are not limited to the above-described objectives, and other objectives and advantages of the present invention, which are not described, can be understood by the following description and also will be apparently understood through exemplary embodiments of the present invention. It is also to be easily understood that the objectives and advantages of the present invention may be realized and attained by means and a combination thereof described in the appended claims.

### [Technical Solution]

The present invention is applicable to an electrode assembly including a jelly-roll shaped electrode cell body in which a first electrode sheet and a second electrode sheet, which have different polarities, and a separator for insulation therebetween are stacked and wound.

The stacking of the sheets may be performed in the order of the first electrode sheet, the separator, the second electrode sheet, and the separator.

The winding may be performed in a length direction of the stacked sheets. An axial length of the j elly-roll shaped electrode cell body formed as described above may correspond to a width of the stacked sheets.

An uncoated portion not coated with an active material layer may be provided at an end portion of at least one of the first electrode sheet and the second electrode sheet in a width direction. Thus, the uncoated portion may be provided at an end portion of the electrode cell body in an axial direction. The uncoated portion may be provided on one side of the end portion of the electrode cell body or on both sides of the end portion thereof in the axial direction.

The uncoated portion of the electrode cell body of the electrode assembly may include a plurality of cut surfaces formed by cutting away a portion of the uncoated portion. For example, the plurality of cut surfaces may be formed by cutting away an outer portion of a forming-scheduled portion and a cutting-scheduled portion. The remaining uncoated portion after the portion is cut away constitutes the forming-scheduled portion.

The plurality of cut surfaces may be disposed in a circumferential direction with a core as a center. The forming-scheduled portion may be disposed between two adjacent cut surfaces in the circumferential direction.

The electrode assembly may include a plurality of forming portions formed by bending the forming-scheduled portion.

The cut surface may be formed in a fan shape in the circumferential direction with the core of the electrode cell body as a center.

The cut surface may have a central angle ranging from 30° to 180°. Specifically, the cut surface may have a central angle ranging from 45° to 180°, and more preferably, ranging from 60° to 120°.

The cut surface may be formed by cutting a portion spaced a predetermined distance in an axially outward direction from a boundary between the uncoated portion and the coated portion. That is, the cut surface may be formed by cutting the uncoated portion of the coated portion and the uncoated portion.

An outer end portion of the forming-scheduled portion may be spaced a predetermined distance from an outer circumferential surface of the electrode cell body toward a central portion thereof. The forming-scheduled portion may have a shape in which a predetermined section is removed from the outer circumferential surface of the electrode cell body toward the central portion thereof.

A height of the forming-scheduled portion in the axial direction may be formed to be less than a distance between the outer end portion of the forming-scheduled portion and the outer circumferential surface of the electrode cell body.

The forming portion may be radially formed with the core of the electrode cell body as a center.

The forming portion may be formed by bending and flattening the forming-scheduled portion a radially outward direction of the electrode cell body.

The forming portion may have a shape in which a predetermined section is removed from the outer circumferential surface of the electrode cell body toward the central portion thereof.

The forming portion may be formed parallel to the radial direction of the electrode cell body.

The electrode cell body may be formed in a cylindrical shape.

The core may be formed in the form of a hollow passing through the central portion of the electrode cell body.

The core may be formed in the form of a hollow passing through the central portion of the electrode cell body, and the forming portion may be flattened in the radially outward direction, thereby not blocking the core in the axial direction. The removal of the uncoated portion may be performed after the winding process is completed.

When the cut surface is formed, the outer portion of the forming-scheduled portion and the cutting-scheduled portion may be simultaneously cut away. Therefore, even when the forming-scheduled portion is bent in the radially outward direction, the flattened forming portion may not block the core of the electrode assembly.

One aspect of the present invention provides a battery cell including the electrode assembly.

The battery cell may include a battery can configured to accommodate the electrode assembly, the battery can being electrically connected to one of the first electrode sheet and the second electrode sheet to have a first polarity, a sealing cap configured to seal an open end of the battery can, and a first current collecting plate electrically connected to another of the first electrode sheet and the second electrode sheet to have a second polarity.

The first current collecting plate may be fixed to the forming portion of the electrode assembly by welding and may be electrically connected thereto.

The battery can may be directly connected to any one of the first electrode sheet and the second electrode sheet or may be connected thereto through a second current collecting plate.

The battery can may include a support further protruding inward in the radial direction from an inner circumference of the battery can. The support may support the sealing cap.

The battery cell may further include an insulator for preventing a short circuit of different polarities.

The insulator may be interposed between the battery can and the sealing cap to insulate therebetween. More specifically, the insulator may be interposed between an outer circumferential surface of the sealing cap and the inner circumferential surface of the battery can and may be interposed between the support and the sealing cap.

The insulator may be interposed between the battery can and the first current collecting plate to insulate therebetween. For example, the insulator may be interposed between the first current collecting plate and the support.

Another aspect of the present invention provides a battery pack including at least one the battery cell.

Still another aspect of the present invention provides a vehicle including at least one the battery pack.

Yet another aspect of the present invention provides a cutting device for cutting an uncoated portion provided at an end portion of the electrode cell body of the electrode assembly in the axial direction.

The cutting device may include a first cutter configured to form a first cutting lines in the uncoated portion in an axial direction of the electrode assembly while moving in the axial direction of the electrode assembly, and a second cutter configured to form a second cutting line in the uncoated portion in a circumferential direction of the electrode assembly while moving in the radial direction of the electrode assembly.

The second cutter may form the second cutting line for cutting a section of the uncoated portion wound in a circumferential direction, wherein the second cutting line may be connected to the first cutting line.

Since the first cutting line and the second cutting line are connected, a portion of the uncoated portion surrounded by the first cutting line and the second cutting line may be cut away.

Yet another aspect of the present invention provides a processing device including the cutting device, and a press for bending a forming-scheduled portion remaining after the cutting by the cutting device.

The press may form a forming portion by pressing and flattening the forming-scheduled portion of the uncoated portion.

The forming-scheduled portion may be pressed in the radial direction by the press, and thus a portion of the forming-scheduled portion corresponding to the second cutting line may be bent and flattened in the radial direction.

The first cutter may include a plurality of first blades radially disposed on the first cutter.

The first blade may include a blade extending in the axial direction and formed at a front end of the first blade in the axial direction.

The first cutter may further include a first vibration generator. The first vibration generator may generate fine vibrations.

The second cutter may form the cut surface in the uncoated portion of the electrode assembly by cutting away the outer portion of the forming-scheduled portion and the cutting-scheduled portion.

The second cutter may include a second blade formed in a triangular shape with a first side blade and a second side blade to cut the cutting-scheduled portion in a fan shape, and a third blade which is connected to one side of the second blade and having a side blade formed to cut the outer portion of the forming-scheduled portion.

The third blade may be formed in a triangular shape having the side blade including a first side blade and a second side blade.

The first side blade of the second blade may be formed to be longer than a length of the first cutting line, and the second side blade of the second blade may be formed to be shorter than a length of the first cutting line.

The third blade may be connected to an outer end portion of the second side blade of the second blade.

The first side blade of the third blade may be formed with a length equal to a width of the forming-scheduled portion.

A length of the second side blade of the third blade may be formed to be less than or equal to the length of the first side blade of the third blade.

The second cutter may further include a second vibration generator. The second vibration generator may generate fine vibrations.

The press may move in the radially outward direction of the electrode cell body to flatten the forming-scheduled portion of the uncoated portion in the radially outward direction of the electrode cell body.

Yet another aspect of the present invention provides a battery cell manufacturing method.

The battery cell manufacturing method may include stacking and winding a first electrode sheet, a second electrode sheet, and a separator to manufacture an electrode assembly.

Thus, the electrode assembly may include an electrode cell body in which the electrode sheets and the separator are wound together.

The electrode cell body may be a cylindrical shape.

The electrode cell body may include a hollow core.

At least one of the first electrode sheet and the second electrode sheet may include an uncoated portion, to which an active material layer is not applied, on one end in a width direction. When both the first electrode sheet and the second electrode sheet are provided with the uncoated portion, the uncoated portions may be provided at both end portions in the width direction.

Thus, the uncoated portion may be provided on the end portion of the electrode cell body in the axial direction in the form of extending and protruding in the axial direction.

A cut surface may be formed by cutting an outer portion of a forming-scheduled portion and a cutting-scheduled portion.

The removal of the uncoated portion may be performed after the electrode stack is wound to form the electrode cell body. This processing may be accomplished by a cutter with an ultrasonically vibrating blade.

The battery cell manufacturing method may include removing a region of the uncoated portion provided at an end portion of the electrode cell body in the axial direction.

Specifically, the removing of the uncoated portion may include forming, by a first cutter, a first cutting line in the uncoated portion of one of the first electrode sheet and the second electrode sheet in the axial direction while the first cutter moves in the axial direction of the electrode cell body and separating the cutting-scheduled portion and the forming-scheduled portion.

The first cutting line may be provided as a plurality of first cutting lines. The plurality of first cutting lines may be radially disposed.

In addition, the removing of the uncoated portion may include, after forming the first cutting lines, forming, by a second cutter, a second cutting line in the uncoated portion in the circumferential direction while the second cutter moves inward in the radial direction from an outer circumference of the battery cell.

The second cutting line may be provided as a plurality of second cutting lines. The plurality of second cutting lines may extend in the circumferential direction and may be aligned in the radial direction.

Lengths of the plurality of the second cutting lines in the circumferential direction may increase from a core to the outer circumference in the radial direction.

The second cutter may form the second cutting line in the uncoated portion, which is wound in the circumferential direction of the electrode cell body, in the circumferential direction while moving in the radial direction of the electrode cell body. When the second cutting line is connected to the first cutting line, an outer portion of the forming-scheduled portion and the cutting-scheduled portion, which are surrounded by the first cutting line and the second cutting line, may be cut away.

A radial length of the forming-scheduled portion in the electrode cell body may be formed to be smaller than a length of the first cutting line.

A height of the forming-scheduled portion in the electrode cell body in the axial direction may be formed to be less than a distance between the outer end portion of the forming-scheduled portion and the outer circumferential surface of the electrode cell body.

The cut surface, which is formed at a position where the uncoated portion is cut away, may be formed in a fan shape in the circumferential direction with the core of the electrode cell body as a center.

The cut surface may have a central angle ranging from 60° to 120°.

The battery cell manufacturing method may further include forming a forming portion by pressing and flattening the forming-scheduled portion, which is a portion of the uncoated portion remaining after being cut away by the cutting lines, in the radially outward direction of the electrode cell body.

The bending processing may be accomplished by pressing the forming-scheduled portion in the radially outward direction using a press.

The forming portion may be radially formed with the core of the electrode cell body as a center.

The forming portion may be formed in the form in which the forming-scheduled portion of the uncoated portion is flattened in the radially outward direction of the electrode cell body.

The forming portion may be formed in the radial direction of the electrode cell body.

The cut surface may be formed by cutting a portion spaced a predetermined distance in an axially outward direction from a boundary between the uncoated portion and the coated portion.

The first cutter may cut the uncoated portion while being vibrated by a first vibration generator. The first cutter may be an ultrasonic cutter.

The second cutter may cut the uncoated portion while being vibrated by a second vibration generator. The second cutter may be an ultrasonic cutter.

### [Advantageous Effects]

In accordance with the present invention, since a forming portion is welded to a current collecting plate in a state of being in surface contact therewith, as an area of the forming portion becomes larger, a current path between an electrode assembly and the current collecting plate can be relatively increased.

In accordance with the present invention, since the forming portion increases the current path by an area corresponding to the sum of gaps between uncoated portions, even when the forming portion is applied to a large capacity battery cell, it is possible to suppress an increase in heating value of the battery cell and to reduce the probability of ignition.

In accordance with the present invention, the forming portion can be formed by separating a cutting-scheduled portion and a forming-scheduled portion in the uncoated portion, cutting away an outer portion of the forming-scheduled portion and the cutting-scheduled portion to form a cut surface, and pressing and flattening the forming-scheduled portion in a radially outward direction. Thus, when the forming portion is formed by pressing the forming-scheduled portion, it is possible to prevent a boundary between the forming portion and the cut surface from being deformed due to tearing or irregular distortion.

In accordance with the present invention, the boundary between the forming portion and the cut surface can be prevented from being torn or deformed so that a torn or deformed portion can be blocked from coming into contact with electrode sheets having opposite polarities.

In accordance with the present invention, the boundary between the forming portion and the cut surface can be prevented from being torn or deformed so that it is possible to prevent an active material applied on a coated portion from being delaminated from the coated portion and prevent a bonding force of the active material from being weakened. Thus, a reduction in the performance and capacity of the battery cell can be suppressed.

In accordance with the present invention, an edge of a separator can be prevented from being lifted or damaged by a torn or deformed portion of the boundary. Therefore, a short circuit between a first electrode sheet and a second electrode sheet can be prevented. Further, a heating value of the battery cell can be reduced or the possibility of an explosion can be significantly reduced.

In accordance with the present invention, since the cut surface is formed by cutting the uncoated portion extending in the axial direction of a region not constituting the forming portion, a length of the uncoated portion occupying both ends of the electrode cell body in the axial direction can be reduced. Thus, a volume of the electrode cell body accommodated in the battery can in the axial volume can be further secured. Therefore, the electrical capacity relative to the volume of the battery cell can be further increased.

In accordance with the present invention, since a second cutter simultaneously cuts the outer portion of the forming-scheduled portion and the cutting-scheduled portion, the manufacturing time of the electrode assembly can be reduced.

In addition to the above-described effects, specific effects of the present invention will be described together with the following detailed description for implementing the present invention.

### [Description of Drawings]

FIG. 1 is a schematic plan view illustrating an electrode cell stack according to the present invention.
FIG. 2 is a cross-sectional view illustrating the electrode cell stack taken along line A-A of FIG. 1.
FIG. 3 is a perspective view illustrating a state in which an electrode cell body is manufactured by winding the electrode cell stack of FIG. 1.
FIG. 4 is a perspective view illustrating a state in which the electrode cell body according to the present invention is cut by a first cutter.
FIG. 5 is a perspective view illustrating the first cutter according to the present invention.
FIG. 6 is a rear view illustrating the first cutter according to the present invention.
FIG. 7 is a plan view illustrating a state in which the first cutter according to the present invention cuts an uncoated portion of the electrode cell body to form first cutting lines.
FIG. 8 is a perspective view illustrating a state before a second cutter according to the present invention cuts the uncoated portion of the electrode cell body.
FIG. 9 is a plan view illustrating the second cutter according to the present invention.
FIG. 10 is a side view illustrating a state in which the second cutter according to the present invention cuts the uncoated portion of the electrode cell body.
FIG. 11 is a plan view illustrating a state in which the second cutter according to the present invention cuts a cutting-scheduled portion of the uncoated portion.
FIG. 12 is a plan view illustrating a state in which the second cutter according to the present invention cuts an outer portion of a forming-scheduled portion of the uncoated portion and a cutting-scheduled portion.
FIG. 13 is a perspective view illustrating a state in which the second cutter according to the present invention cuts the outer portion of the forming-scheduled portion and the cutting-scheduled portion.
FIG. 14 is a perspective view illustrating a state in which a press according to the present invention forms a forming portion by bending the forming-scheduled portion in a radially outward direction and flattening the forming-scheduled portion.
FIG. 15 is a side view illustrating a state in which the press according to the present invention forms the forming portion by bending the forming-scheduled portion in the radially outward direction.

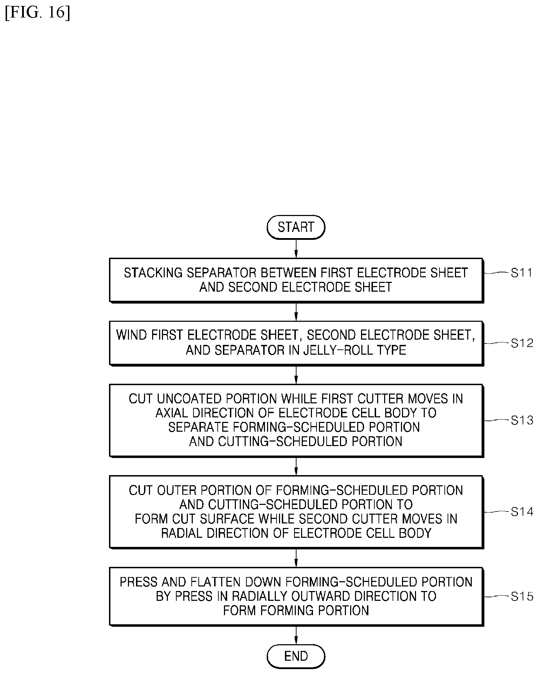

FIG. 16 is a flowchart illustrating a method of manufacturing a battery cell according to the present invention.
FIG. 17 is a cross-sectional view illustrating an electrode assembly according to the present invention.
FIG. 18 is a perspective view illustrating a state in which the electrode assembly according to the present invention is accommodated in a pack housing.
FIG. 19 is a perspective view illustrating a state in which a battery pack according to the present invention is installed in a vehicle.

10: electrode stack
11: first electrode sheet
12: second electrode sheet
13: separator
14: coated portion
15: uncoated portion
16: boundary
16a: second cutting line
100: battery cell
101: pack housing
110: electrode assembly
111: electrode cell body
112: core
113: first cutting line
115: cut surface
115a: cutting-scheduled portion
117: forming portion
117a: forming-scheduled portion
117b outer portion of forming-scheduled portion
120: battery can
121: battery can body
122: support
123: clamping portion
130: first current collecting plate
132: center hole
140: second current collecting plate
150: sealing cap
151: cap plate
152: external terminal
153: vent plate
155: lead
157: insulator
210: first cutter
211: first blade
211 a: blade of first blade
213: first vibration generator
215: first communication hole
220: second cutter
221: second blade
221a: one side blade of second blade
221b other side blade of second blade
222: third blade
222a: one side blade of third blade
222b: other side blade of third blade
223: second vibration generator
230: press
300: vehicle

### [Modes of the Invention]

Hereinafter, exemplary embodiments of the present invention will be described in detail with reference to the accompanying drawings.

The present invention is not limited to the embodiments disclosed below and may be implemented in a variety of different forms with various modifications. These embodiments are provided only to provide a complete disclosure of the present invention and to fully disclose the scope of the present invention to those skilled in the art. Therefore, the present invention is not limited to the embodiments disclosed below, and it should be understood to include substitutions or additions of components between one embodiment and another embodiment as well as include all modifications, equivalents, or substitutions falling within the technical idea and scope of the present invention.

The accompanying drawings are merely intended to facilitate understanding of embodiments disclosed herein, and the technical spirit disclosed herein is not limited by the accompanying drawings, and it should be understood that all modifications, equivalents, and substitutes fall within the spirit and scope of the present invention. In the drawings, components may be exaggeratedly large or small in size or thickness for convenience of understanding, but it should not be construed to limit the scope of the present invention.

Terms used herein are for the purpose of describing only specific examples or embodiments and are not intended to limit the present invention. In addition, the singular forms include plural forms unless the context clearly notes otherwise. Terms such as "including" and "comprising" in the present specification is intended to specify that features, numbers, steps, operations, components, parts, or combinations thereof described in the present specification are present. That is, the terms such as "including," "comprising," and the like in the present specification should be understood as not precluding the possibility of the presence or addition of one or more other features, numbers, steps, operations, components, parts, or combinations thereof.

Terms including ordinal numbers such as first, second, and the like used herein may be used to describe various components, but the various components are not limited by these terms. The terms are used only for the purpose of distinguishing one component from another component.

When a first component is referred to as being "connected" or "coupled" to a second component, the first component may be directly connected or coupled to the second component, but it should be understood that a third component may be present between the first component and the second component. Conversely, when a first component is referred to as being "directly connected" or "directly coupled" to a second component, it should be understood that a third component may not be present between the first component and the second component.

When a first component is referred to as being disposed "above" or "below" a second component, it should be understood that the first component is disposed immediately above the second component as well as a third component may be present between the first component and the second component.

Unless otherwise defined, all terms including technical or scientific terms used herein have the same meaning as commonly understood by those skilled in the art to which the present invention pertains. General terms that are defined in a dictionary should be construed as having meanings that are consistent in the context of the relevant art and are not to be interpreted as having an idealistic or excessively formal meaning unless clearly defined in the present application.

Hereinafter, an electrode assembly according to embodiments of the present invention will be described.

For convenience of description, a length direction of a winding axis of an electrode assembly 110 wound in a jelly-roll form is referred to as an axial direction Y herein. In addition, a direction surrounding the winding axis is referred to as a circumferential direction X. In addition, a direction of approaching the winding axis or moving away therefrom is referred to as a radial direction Z. Among these directions, a direction approaching the winding axis is referred to as a centripetal direction, and a direction moving away therefrom is referred to as a centrifugal direction.

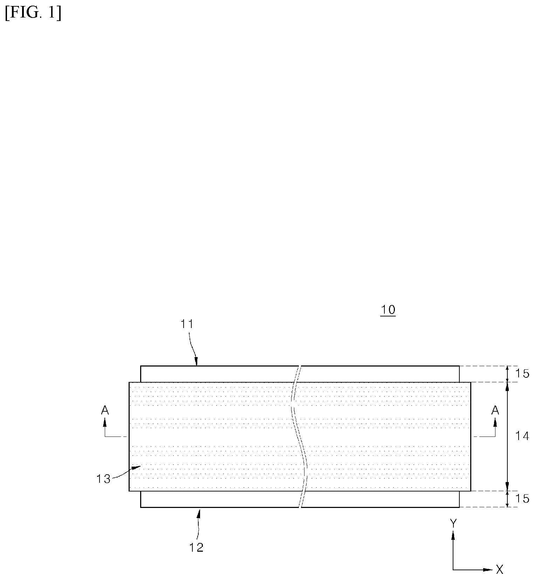

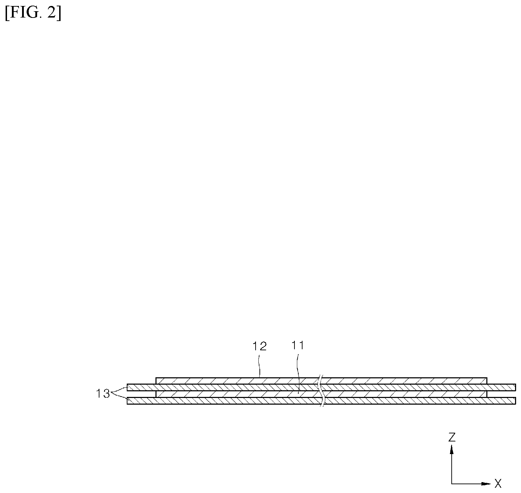

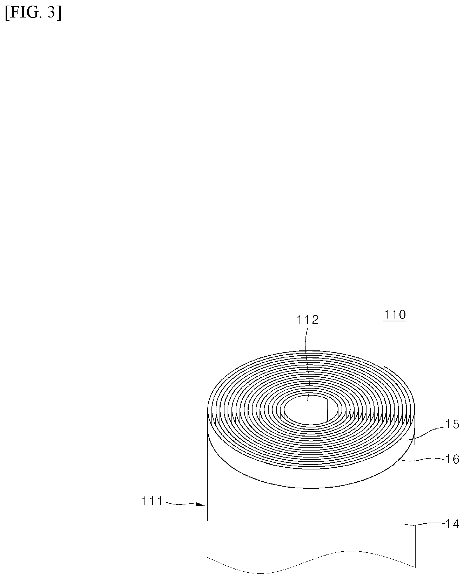

FIG. 1 is a schematic plan view illustrating an electrode cell stack according to the present invention, FIG. 2 is a cross-sectional view illustrating the electrode cell stack taken along line A-A of FIG. 1, and FIG. 3 is a perspective view illustrating a state in which an electrode cell body is manufactured by winding the electrode cell stack of FIG. 1.

Referring to FIGS. 1 to 3, an electrode stack 10 according to embodiments of the present invention includes a first electrode sheet 11, a second electrode sheet 12, and a separator 13. The electrode stack 10 is formed by stacking the first electrode sheet 11 and the second electrode sheet 12, each of which is in the form of a sheet, with a separator 13 therebetween. For example, the electrode stack 10 may be formed by stacking one first electrode sheet 11, one second electrode sheet 12, and two separators 13. Alternatively, the electrode stack 10 may be formed by stacking two or more first electrode sheets 11, two or more second electrode sheets 12, and three or more separators 13. In the electrode stack 10, as the stacked number of first electrode sheets 11, second electrode sheets 12, and separators 13 increases, the time for winding and manufacturing of the electrode assembly 110 with a desired diameter may be reduced.

The first electrode sheet 11 and the second electrode sheet 12 each include a coated portion 14 coated with an active material and an uncoated portion 15 not coated with an active material. The uncoated portion 15 may be formed on one side of each of the first electrode sheet 11 and the second electrode sheet 12 in a width direction. At least a portion itself of the uncoated portion 15 may be used as an electrode tab. When the electrode assembly 110 is wound in a cylindrical form, the uncoated portion 15 of the first electrode sheet 11 may be disposed on one side in an axial direction (an upper or lower side in FIG. 1), and the uncoated portion 15 of the second electrode sheet 12 may be disposed on the other side in the axial direction.

The uncoated portion 15 of the first electrode sheet 11 and the uncoated portion 15 of the second electrode sheet 12 may be formed to have the same width. Alternatively, the uncoated portion 15 of the first electrode sheet 11 and the uncoated portion 15 of the second electrode sheet 12 may be formed to have different widths.

The first electrode sheet 11 may be a negative electrode sheet coated with a negative electrode active material, and the second electrode sheet 12 may be a positive electrode sheet coated with a positive electrode active material. Alternatively, the first electrode sheet 11 may be a positive electrode sheet coated with a positive electrode active material, and the second electrode sheet 12 may be a negative electrode sheet coated with a negative electrode active material.

The first electrode sheet 11 and the second electrode sheet 12 each include a current collector made of metal foil and an active material layer. The metal foil may be aluminum or copper. The active material layer may be applied on one side or both sides of each of the first electrode sheet 11 and the second electrode sheet 12.

The width of the uncoated portion 15 is formed to be significantly smaller than the width of the coated portion 14. The uncoated portion 15 may be formed in the form of a band with a narrow width. Alternatively, the uncoated portion 15 may be formed of a plurality of segmented pieces spaced apart from each other in the length direction of the uncoated portion 15 to form a sawtooth shape. A shape of the segmented piece may be changed to a quadrangular shape, a triangular shape, a semicircular shape, a semi-elliptical shape, or a parallelogram shape.

In the present invention, the positive electrode active material applied on the first electrode sheet 11 and the negative electrode active material applied on the second electrode sheet 12 may be used without limitation as long as they are active materials known in the art.

The positive electrode active material may include a lithium intercalation material as a main component such as a layered compound including lithium cobalt oxide (LiCoO₂) or lithium nickel oxide (LiNiO₂), or compounds substituted with one or more transition metals; a lithium manganese oxide (LiMnO₂) such as a lithium manganese oxide represented by a chemical formula Li₁₊ₓMn₂ₓO₄ (where x ranges from 0 to 0.33), LiMnO₃, LiMn₂O₃, or LiMnO₂; lithium copper oxide (Li₂CuO₂); a vanadium oxide including LiV₃O₈, LiFe₃O₄, V₂O₅, and Cu₂V₂O₇; a lithiated nickel oxide represented by a chemical formula LiNi₁₋ₓMₓO₂ (where M is Co, Mn, Al, Cu, Fe, Mg, B, or Ga, and x ranges from 0.01 to 0.3); a lithium manganese composite oxide represented by a chemical formula LiMn₂₋ₓMₓO₂ (where M is Co, Ni, Fe, Cr, Zn, or Ta, and x ranges from 0.01 to 0.1) or Li₂Mn₃MO₈ (where M is Fe, Co, Ni, Cu, or Zn); LiMn₂O₄ in which a part of Li in a chemical formula is substituted with an alkaline earth metal ion; a disulfide compound; and a composite oxide formed by Fe₂(MoO₄)₃ or a combination thereof. The positive electrode active material includes the above types of materials, but the present invention is not limited thereto.

The positive electrode current collector has a thickness, for example, ranging from 3 µm to 500 µm. The positive electrode current collector is not particularly limited, as long as it has conductivity without causing a chemical change in a battery. For example, the positive electrode current collector may be made of stainless steel, aluminum, nickel, titanium, calcined carbon, or aluminum or stainless steel surface-treated with carbon, nickel, titanium, silver, or the like. Fine irregularities may be formed on a surface of the electrode current collector to increase adhesion of the positive electrode active material. The electrode current collector may be formed in various forms including films, sheets, foils, nets, porous bodies, foams, non-woven fabrics.

A conductive material may be additionally mixed with positive electrode active material particles. The conductive material is added in an amount, for example, ranging from 1 wt% to 50 wt% based on the total weight of the mixture including the positive electrode active material. The conductive material is not particularly limited, as long as it has high conductivity without causing a chemical change in a battery. For example, a conductive material such as natural graphite, artificial graphite, or the like, carbon black such as carbon black, acetylene black, ketjen black, channel black, furnace black, lamp black, thermal black, or the like, a conductive fiber such as a carbon fiber, a metal fiber, or the like, a metal powder such as a carbon fluoride powder, an aluminum powder, a nickel powder, or the like, a conductive whisker such as a zinc oxide whisker, a potassium titanate whisker, or the like, a conductive oxide such as a titanium oxide or the like, and a conductive material such as a polyphenylene derivative or the like may be used.

In addition, the negative electrode sheet is manufactured by applying and drying negative electrode active material particles on the negative electrode current collector and may further include components such as the above-described conductive material, a binder, a solvent, and the like, as necessary.

The negative electrode current collector has a thickness, for example, ranging from 3 µm to 500 µm. The negative electrode current collector is not particularly limited, as long as it has conductivity without causing a chemical change in a battery. For example, the negative electrode current collector may be made of copper, stainless steel, aluminum, nickel, titanium, calcined carbon, copper or stainless steel surface-treated with carbon, nickel, titanium, or silver, an aluminum-cadmium alloy, or the like. In addition, like the positive electrode current collector, fine irregularities may be formed on a surface of the negative electrode current collector to enhance a bonding force of the negative electrode active material, and the negative electrode current collector may be used in a variety of forms such as a film, a sheet, foil, a net, a porous body, foam, and a nonwoven fabric.

The negative electrode active material may be made of, for example, carbon such as non-graphitized carbon or graphitized carbon; a metal composite oxide such as LiₓFe₂O₃ (0≤x≤1), LiₓWO₂ (0≤x≤1), or SnₓMe₁₋ₓMe'yO_{z} (Me is Mn, Fe, Pb, or Ge, Me' is Al, B, P, or Si, group 1, 2, 3 elements of the periodic table, halogens, 0<x≤1, 1≤y≤3, and 1≤z≤8); lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni based material, or the like.

A binder polymer usable in the electrode sheets 11 and 12 is a component that assists in binding of electrode active material particles to the conductive material or the like and to the electrode current collector and is added in an amount, for example, ranging from 1 wt% to 50 wt% based on the total weight of the mixture including the electrode active material. Examples of the binder polymer include any one binder polymer selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, an ethylene-co-vinyl acetate copolymer, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but present invention is not limited thereto.

Non-limiting examples of a solvent used in the manufacturing of the electrode include acetone, tetrahydrofuran, methylene chloride, chloroform, dimethylformamide, N-methyl-2-pyrrolidone (NMP), cyclohexane, water, or a mixture thereof. These solvents provide an appropriate level of viscosity to form an applied slurry layer at a desired level on a surface of the electrode current collector.

The separator 13 has a porous polymeric substrate, and porous coating layers positioned on both sides of the porous polymeric substrate and including inorganic particles and a binder polymer.

The porous polymeric substrate may be a polyolefin-based porous substrate.

The polyolefin-based porous substrate may be in the form of a film or a non-woven web. The separator 13 has the porous structure to facilitate the movement of an electrolyte between the positive electrode and the negative electrode. The porous structure may increase electrolyte impregnation of the substrate itself, thereby securing excellent ionic conductivity, and prevent an increase of resistance inside an electrochemical device, thereby preventing the electrochemical device from being degraded.

The polyolefin-based porous substrate used in the present invention may be any planar porous substrate as long as it can be typically used in an electrochemical device, and a material or shape may be variously selected according to the purpose of use.

Non-limiting examples of the polyolefin-based porous substrate may include high density polyethylene, low density polyethylene, linear low density polyethylene, very high molecular weight polyethylene, polypropylene, or a film or non-woven web formed of a mixture of two or more thereof, but the present invention is not limited thereto.

The polyolefin-based porous substrate may have a thickness ranging from 8 µm to 30 µm, but this is only an example, and the polyolefin-based porous substrate may have a thickness outside the above range in consideration of mechanical properties and high-efficiency charging and discharging characteristics of the battery.

The separator 13 according to the present invention may have a thickness ranging from 1 µm to 100 µm, or 5 µm to 50 µm. When the thickness of the separator 13 is less than 1 µm, a function of the separator 13 may not be sufficiently exhibited, and degradation of the mechanical properties of the separator 13 may occur. When the thickness of the separator 13 exceeds 100 µm, the characteristics of a battery may be degraded during high-rate charging and discharging. In addition, the separator 13 may have a porosity ranging from 40% to 60% and an air permeability of 150 to 300 seconds/100 mL.

When the separator 13 according to one embodiment of the present invention is used, since the separator 13 is provided with the porous coating layers on both sides of the porous polymer substrate, it is possible to form a uniform solid electrolyte interface layer due to improved impregnation performance for the electrolyte and secure good air permeability compared to the conventional single-sided inorganic porous coating layer-coated separator 13. For example, the air permeability may be 120 s/100 cc or less. In addition, even when the inorganic porous coating layers are provided on the both sides of the porous polymer substrate, it is possible to implement a thickness at a level of the thickness of the conventional single-sided inorganic porous coating layer-coated separator 13. For example, the thickness may be 15.0 µm or less.

In addition, when the separator 13 according to one embodiment of the present invention is used, stability of the separator 13 is improved so that heat and compression resistance characteristics may be secured. Specifically, the heat resistance characteristic with a heat shrinkage characteristic of 5% or less based on a temperature of 180°C may be secured, and a puncture strength property of 550 gf or more may be secured, and when core deformation occurs during a cycle of a battery employing the separator 13, damage to or penetration of the separator 13 may be prevented at a stepped portion.

An electrode assembly manufactured using the above-described electrode stack will be described.

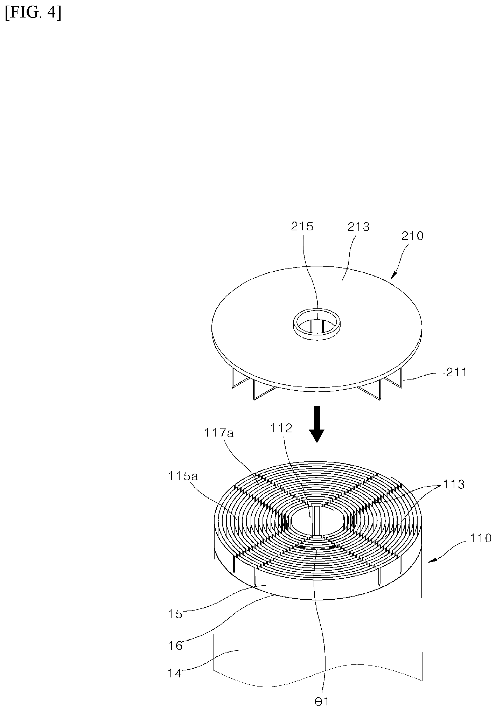

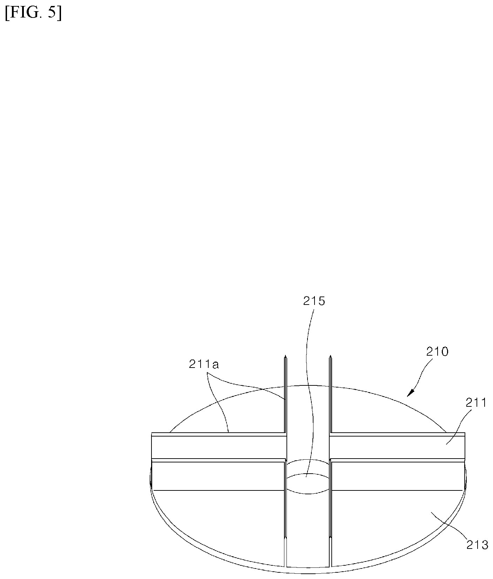

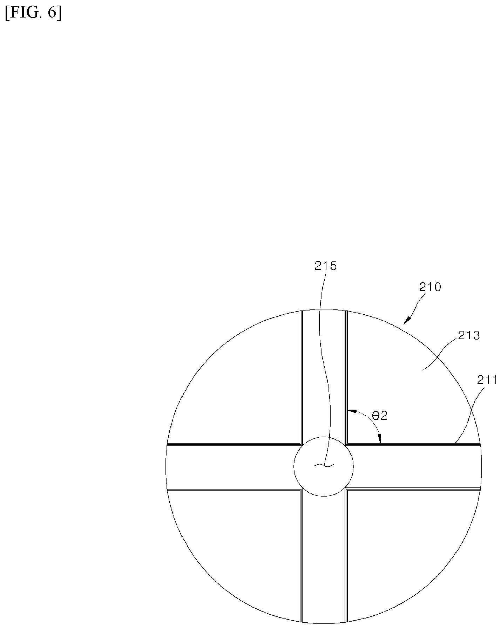

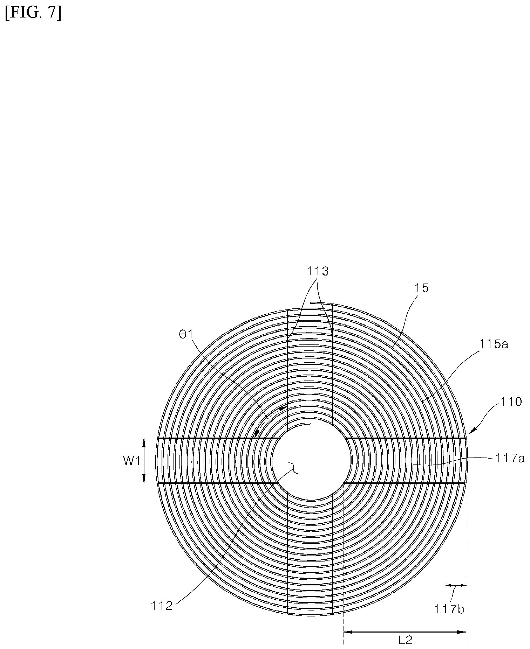

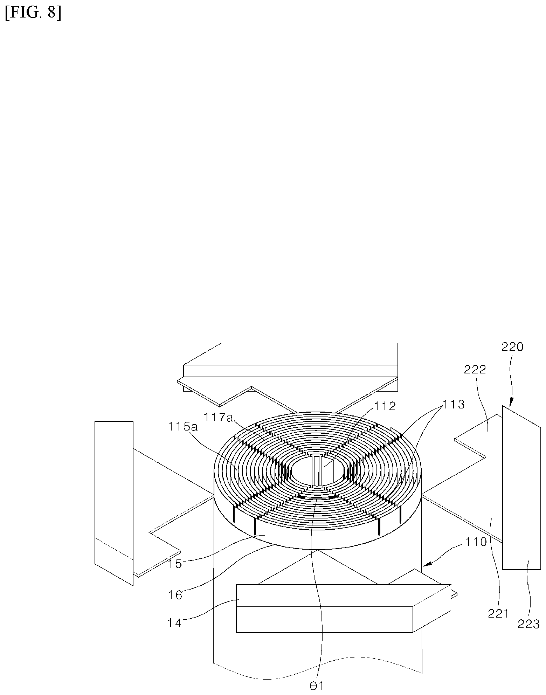

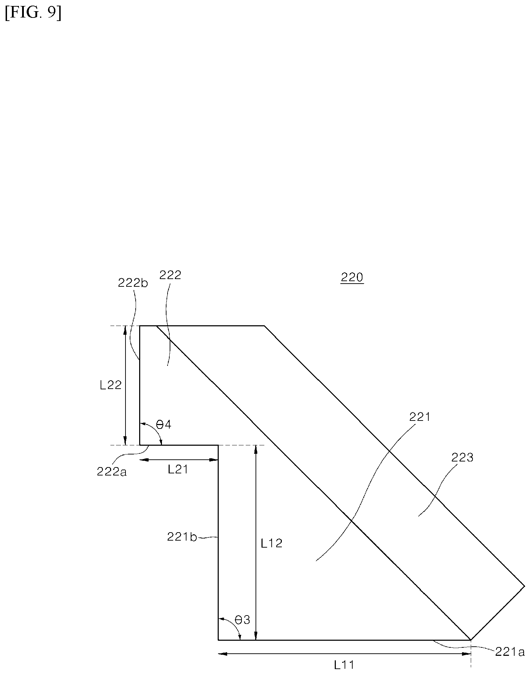

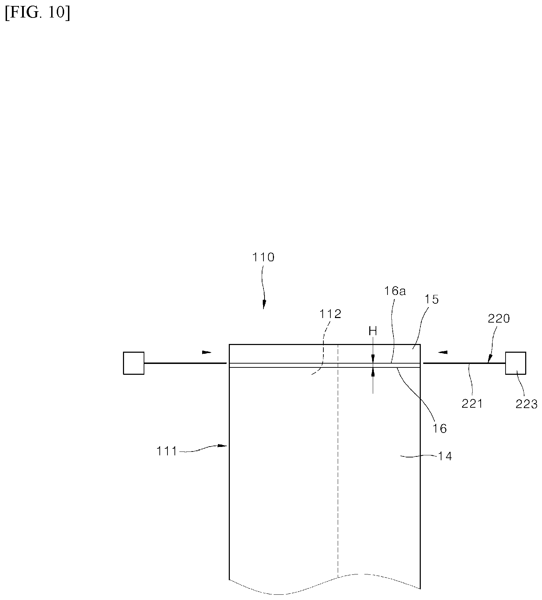

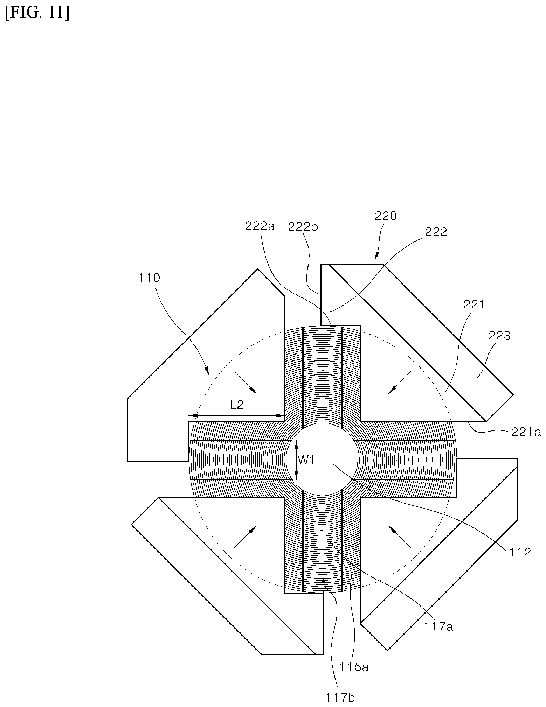

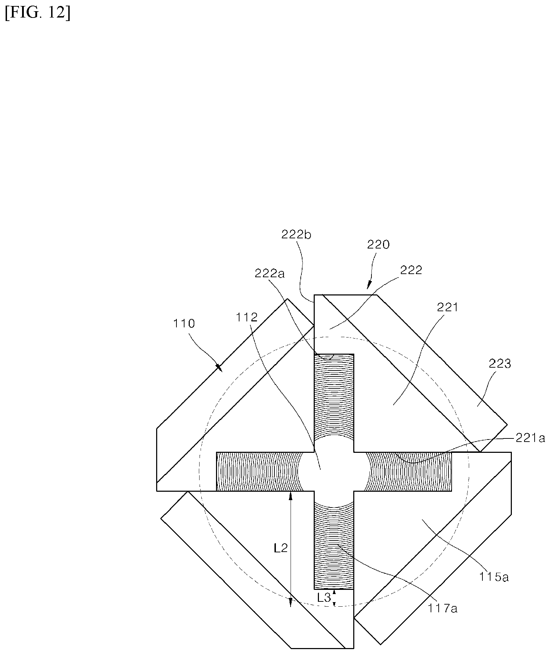

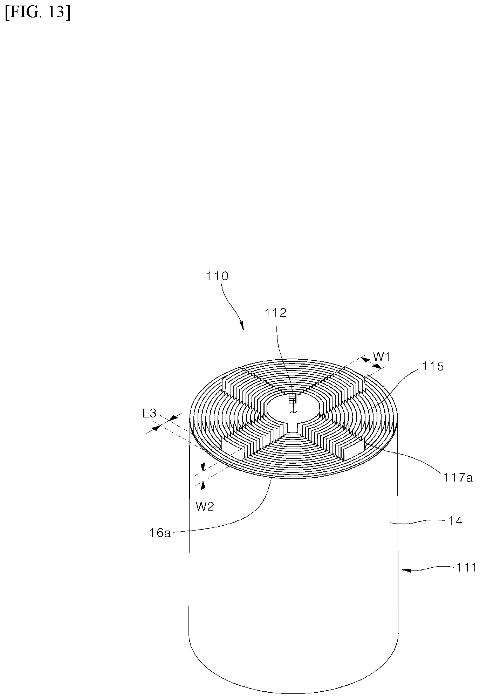

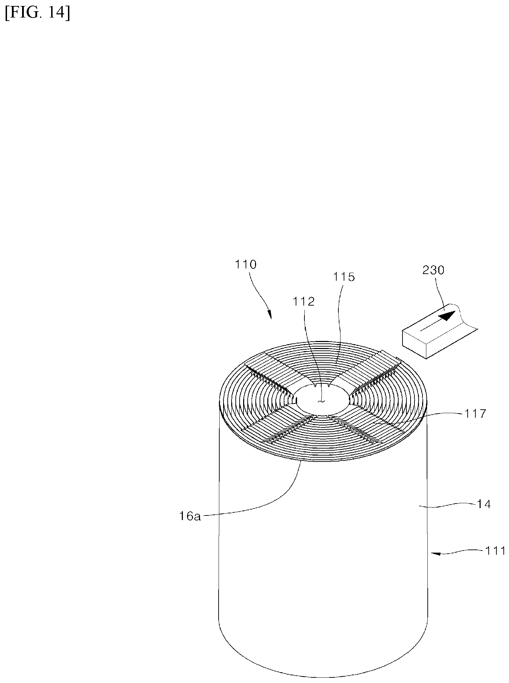

FIG. 4 is a perspective view illustrating a state in which the electrode cell body according to the present invention is cut by a first cutter, FIG. 5 is a perspective view illustrating the first cutter according to the present invention, FIG. 6 is a rear view illustrating the first cutter according to the present invention, FIG. 7 is a plan view illustrating a state in which the first cutter according to the present invention cuts an uncoated portion of the electrode cell body to form first cutting lines, FIG. 8 is a perspective view illustrating a state before a second cutter according to the present invention cuts the uncoated portion of the electrode cell body, FIG. 9 is a plan view illustrating the second cutter according to the present invention, FIG. 10 is a side view illustrating a state in which the second cutter according to the present invention cuts the uncoated portion of the electrode cell body, FIG. 11 is a plan view illustrating a state in which the second cutter according to the present invention cuts a cutting-scheduled portion of the uncoated portion, FIG. 12 is a plan view illustrating a state in which the second cutter according to the present invention cuts an outer portion of a forming-scheduled portion of the uncoated portion and a cutting-scheduled portion, FIG. 13 is a perspective view illustrating a state in which the second cutter according to the present invention cuts the outer portion of the forming-scheduled portion and the cutting-scheduled portion, and FIG. 14 is a perspective view illustrating a state in which a press according to the present invention forms a forming portion by bending the forming-scheduled portion in a radially outward direction and flattening the forming-scheduled portion.

Referring to FIGS. 4 to 14, the electrode assembly 110 includes an electrode cell body 111, a plurality of cut surfaces 115, and a plurality of forming portions 117.

The electrode cell body 111 is a cylindrical component wound in a jelly-roll type in a state in which the first electrode sheet 11 and the second electrode sheet 12, each of which is in the form of a sheet, are stacked with the separator 13 disposed therebetween. As described above, the uncoated portions 15 not coated with an active material layer are formed at the end portions of the first electrode sheet 11 and the second electrode sheet 12 in the width direction and are disposed at one side and the other side of the electrode cell body 111 in the axial direction, respectively, and extend in the axial direction.

The electrode cell body 111 may be formed by winding the stack elongated in the length direction around a winding rod (not shown) and withdrawing the winding rod from the electrode cell body 111. In this case, as more of the first electrode sheets 11, the second electrode sheets 12, and the separators 13 are stacked in the electrode stack 10, the time for winding and manufacturing the electrode assembly 110 may be reduced. The portion where the winding rod is withdrawn from the electrode cell body 111 constitutes a hollow core 112.

The uncoated portion 15 of the first electrode sheet 11 is exposed at a predetermined height at one side of the electrode cell body 111 in the axial direction, and the uncoated portion 15 of the second electrode sheet 12 is exposed at a predetermined height at the other side of the electrode cell body 111 in the axial direction.

The first cutter 210 cuts the uncoated portion 15 of the electrode cell body 111 in the axial direction to separate cutting-scheduled portions 115a and forming-scheduled portions 117a in a circumferential direction. First cutting lines 113 are formed between the cutting-scheduled portions 115a and the forming-scheduled portions 117a. The cutting-scheduled portion 115a and the forming-scheduled portion 117a are alternately disposed in the circumferential direction of the electrode cell body 111. The first cutting line 113 is formed in the form of extending from the axial end of the uncoated portion 15 toward the electrode cell body 111 in the axial direction. In this case, the cutting-scheduled portion 115a and the forming-scheduled portion 117a maintain their upright state in the axial direction of the electrode cell body 111.

The second cutter 220 cuts lower portions in the axial direction of an outer portion 117b (see FIGS. 7 and 8) of the forming-scheduled portion 117a and the cutting-scheduled portion 115a in the uncoated portions 15 in the radial direction to remove the outer portion 117b of the forming-scheduled portion 117a and the cutting-scheduled portion 115a from the electrode cell body 111. The second cutter 220 forms second cutting lines 16a (see FIGS. 13 and 14) extending to lower portions of the uncoated portions 15 in the circumferential direction, which are present in regions corresponding to the outer portion 117b of the forming-scheduled portion 117a and the cutting-scheduled portion 115a. The second cutting lines 16a are formed in the circumferential direction of the uncoated portion 15 and are provided at lower portions of adjacent uncoated portions disposed in the radial direction. When both end portions of the second cutting line 16a in the circumferential direction are connected to a pair of first cutting lines 13 present at both sides of the outer portion 117b of the forming-scheduled portion 117a and the cutting-scheduled portion 115a in the circumferential direction, the outer portion 117b of the forming-scheduled portion 117a and the cutting-scheduled portion 115a, which are surrounded by the pair of first cutting lines 13 and the second cutting lines 16a, are separated from the electrode cell body 111. A short uncoated portion, which remains after the outer portion 117b of the forming-scheduled portion 117a and the cutting-scheduled portion 115a are cut, constitutes a cut surface 115.

Thus, the cut surface 115 and the forming-scheduled portion 117a are provided in the uncoated portion 15 of the electrode cell body 111.

In order to prevent a buckling phenomenon which may occur when the thin uncoated portion 15 is cut in the axial direction, an ultrasonic cutter may be used as the first cutter 210 which performs cutting processing to form the first cutting lines 113.

The first cutter 210 includes a plurality of first blades 211 disposed in a direction corresponding to the radial direction of the electrode cell body 111, and a first vibration generator 213 to which the first blades 211 are fixed.

The first vibration generator 213 includes a circular plate (not shown) and a vibration source (not shown) for vibrating the circular plate.

Bases of the plurality of first blades 211 may be fixed to a surface of the circular plate of the first vibration generator 213, the plurality of first blades 211 may extend in a direction corresponding to the axial direction of the electrode cell body 111, and sharp blades 211a may be provided at front ends of the plurality of first blades 211.

The plurality of first blades 211 are radially disposed based on a central portion of the first vibration generator 213. For example, a pair of first blades 211 defining the forming-scheduled portion 117a may be formed at four positions in a cross shape based on the central portion of the first vibration generator 213. Alternatively, the pair of first blades 211 may be radially disposed at six positions at 60° intervals. Alternatively, the pair of second blades 221 may be radially disposed at three positions at 120° intervals. An angle θ2 between the pairs of first blades 211 may be appropriately selected according to a diameter of the electrode cell body 111, a capacity of a battery pack, or shapes of current collecting plates 130 and 140 to be welded to the electrode cell body 111.

In the embodiment, a structure in which the pair of first blades 211 defining the forming-scheduled portion 117a are disposed in parallel is illustrated as an exemplary embodiment. However, there is no need for the pair of first blades 211 to be disposed parallel to each other. For example, the pair of first blades 211 may be in the form of being gradually spaced apart toward a centrifugal direction or a centripetal direction. In addition, although the first blade 211 is illustrated in a straight shape, the first blade 211 is not necessarily formed in the straight shape. The first blade 211 may have a gently curved shape.

A distance between a pair of first blades 211 and another pair of first blades 211 adjacent thereto in the circumferential direction may decrease in the centripetal direction and may increase in the centrifugal direction. That is, this may define a fan shape of the cut surface 115.

For processing of the second cutting lines 16a by the second cutter 220 which will be described below, the distance between a pair of first blades 211 and another pair of first blades 211 adjacent thereto in the circumferential direction may not increase in the centripetal direction and may not decrease in the centrifugal direction.

The first vibration generator 213 may include an ultrasonic vibrator. A first communication hole 215 is formed in a central portion of the first vibration generator 213 to communicate with the core 112. The first vibration generator 213 ultrasonically vibrates when the first blade 211 moves in the axial direction of the electrode cell body 111 and cuts the uncoated portion 15.

When a force of the first blade 211 pressing the uncoated portion 15 in the axial direction is not used to process the first cutting line 113 and presses the uncoated portion 15, deformation may occur, such as buckling of the uncoated portion 15 or bending or folding of the uncoated portion 15 in the vicinity of the first cutting line 113.

When the first blade 211 is ultrasonically vibrated, the above phenomenon is prevented when the first blade 211 cuts the uncoated portion 15, and the cutting process is very smoothly performed. Thus, a cutting speed of the uncoated portion 15 can be improved, and the first cutting line 113 of the uncoated portion 15 can be formed smoothly. As long as the first vibration generator 213 vibrates the first blade 211, various vibration methods may be applied.

One or more second cutters 220 may cut the uncoated portion 15 of the electrode assembly 110 to form the cut surfaces 115. For example, four second cutters 220 may move at one time to form the cut surfaces 115. Alternatively, two second cutters 220 may move to form two cut surfaces 115 and then form the remaining two cut surfaces 115. In addition, one second cutter 220 may move to sequentially form one cut surface 115. FIG. 8 illustrates a case where four second cutters 220 cut the uncoated portion 15, but the present invention is not limited thereto.

Referring to FIGS. 8 to 11, the second cutter 220 includes a second blade 221 for cutting the uncoated portion 15 in the radial direction, a third blade 222 connected to one side of the second blade 221 and configured to cut the uncoated portion 15 in the radial direction together with the second blade 221, and a second vibration generator 223 to which the second blade 221 and the third blade 222 are fixed.

The second blade 221 may have a shape in which a width becomes narrower toward a front end. Specifically, the second blade 221 may have a triangular or wedge shape. A vertex of the second blade 221 may be formed at an angle θ3 ranging from 60° to 120°. The angle θ3 of the vertex of the second blade 221 is formed to correspond to a central angle θ1 of the cut surface 115, which will be described below. In the embodiment, an example in which the angle θ3 of the vertex of the second blade 221 is about 90° is illustrated. The second blade 221 may have a double-edged shape. That is, blades 221a and 221b may be provided at positions corresponding to two oblique sides extending to the front end.

The third blade 222 may have a shape in which a width becomes narrower toward the front end. Specifically, the third blade 222 may have a triangular or wedge shape. A vertex of the third blade 222 may be formed at an angle θ4 ranging from 60° to 120°. In the embodiment, an example in which the angle θ4 of the vertex of the third blade 222 is about 90° is illustrated. The third blade 222 may have a double-edged shape. That is, blades 222a and 222b may be provided at positions corresponding to two oblique sides extending to the front end.

In addition, the angle θ4 of the vertex of the third blade 222 is changed according to the central angle θ3 of the second blade 221. For example, when the central angle θ3 of the second blade 221 is 60°, the central angle θ4 of the third blade 222 is formed to be 120°. Conversely, when the central angle θ3 of the second blade 221 is 120°, the central angle θ4 of the third blade 222 is formed to be 60°. Accordingly, the other side blade 221b of the second blade 221 and a one side blade 222a of the third blade 222 form an angle of about 90°. In addition, when the third blade 222 cuts the outer portion 117b of the forming-scheduled portion 117a, the outermost portion of the forming-scheduled portion 117a is formed parallel to a tangent line of the electrode cell body 111.

When the second blade 221 and the third blade 222 move in the radial direction to form the second cutting lines 16a, a pointed front end of the second blade 221 first cuts and enters a central portion of the cutting-scheduled portion 115a of the uncoated portion 15 in the circumferential direction, and the third blade 222 cuts and enters a central portion of the outer portion 117b of the forming-scheduled portion 117a. As the second blade 221 moves in the centripetal direction, the two blades 221a and 221b extend the second cutting lines 16a to both sides in the circumferential direction, and as the third blade 222 moves in the centripetal direction, the two blades 222a and 222b extend the second cutting lines 16a to both sides in the circumferential direction. When the second blade 221 and the third blade 222 apply forces to side surfaces of the uncoated portion 15 in the radial direction, large areas of the second blade 221 and the third blade 222 do not touch the side surfaces of the uncoated portion 15 at one time, and the forces are concentrated at the pointed front end and applied to the uncoated portion 15. Therefore, when the second cutting lines 16a are formed on the side surfaces of the uncoated portion 15, the uncoated portion 15 is not deformed by being laterally pressed. Once the front ends of the second blade 221 and the third blade 222 cut and enter the uncoated portion 15, as the second cutter 220 moves in the centripetal direction, the second blade 221 and the two blades 222a and 222b of the third blade 222 press and cut the second cutting lines 16a in the circumferential direction. The cutting method and cutting direction of the second cutter 220 minimizes the deformation of the uncoated portion 15.

The second vibration generator 223 may include an ultrasonic vibrator. The second vibration generator 223 ultrasonically vibrates when the second blade 221 and the third blade 222 move in the radial direction of the electrode cell body 111 and cut the uncoated portion 15. Thus, a cutting speed of the uncoated portion 15 can be improved, and the cut surface 115 can be formed smoothly. As long as the second vibration generator 223 vibrates the second blade 221 and the third blade 222, various vibration methods may be applied.

The one side blade 221a of the second blade 221 is formed to be longer than a length L2 of the first cutting line 113, and the other side blade 221b of the second blade 221 is formed to be shorter than the length L2 of the first cutting line 113 (L11>L2 and L12>L2). In this case, the third blade 222 is connected to an outer end portion of the other side blade 221b of the second blade 221. A total length L12+L21 obtained by summing the length L12 of the other side blade 221b of the second blade 221 and the length L21 of the one side blade 222a of the third blade 222 may be the same or approximately similar to the length L11 of the one side blade 221a of the second blade 221. The front end of the second blade 221 protrudes at a predetermined height from the front end of the third blade 222. Thus, after the second blade 221 enters the cutting-scheduled portion 115a at a predetermined height or more, the front end of the third blade 222 enters and cuts the outer portion 117b of the forming-scheduled portion 117a. That is, the second blade 221 and the third blade 222 start to cut the uncoated portion 15 with a slight time difference, but time points at which the cutting of the uncoated portion 15 is completed are the same.

The length L21 of the one side blade 222a of the third blade 222 is formed to be the same as or slightly longer than a width W1 of the forming-scheduled portion 117a. Thus, when four second cutters 220 simultaneously cut the uncoated portion 15, it is possible to prevent the third blade 222 from getting caught on or colliding with a second blade 221 of an adjacent second cutter 220.

The length L22 of the other side blade 222b of the third blade 222 is formed to be less than or equal to the length L21 of the one side blade 222a of the third blade 222. Approximately less than half of the other side blade 222b of the third blade 222 is used to cut the outer side of the forming-scheduled portion 117a. Thus, the other side blade 222b may be formed in only a section of the other side of the third blade 222.

Referring to FIGS. 11 to 14, the plurality of cut surfaces 115 are formed by cutting away the outer portion 117b of the forming-scheduled portion 117a and the cutting-scheduled portion 115a, which are parts of the uncoated portion 15, in a circumferential direction with the core 112 of the electrode cell body 111 as a center. In this case, the plurality of cut surfaces 115 may be disposed at equal intervals in the circumferential direction with the core 112 as a center. In addition, the plurality of cut surfaces 115 may be formed in the same size and the same shape.

The plurality of forming portions 117 are formed by pressing and flattening the forming-scheduled portions 117a of the uncoated portions 15 disposed between the cut surfaces 115 in a direction intersecting the axial direction, for example, a radially outward direction. The plurality of forming portions 117 may be formed by pressing and flattening the forming-scheduled portions 117a of the uncoated portions 15 using a press 230 which will be described below. In this case, the plurality of forming portions 117 may be formed such that a plurality of uncut pieces constituting the forming-scheduled portions 117a are sequentially overlapped and flattened. Thus, the forming portion 117 may be formed to be inclined with respect to the axial direction of the electrode cell body 111 or may be completely flattened and formed flat.

The plurality of forming portions 117 are portions which are welded to the current collecting plates 130 and 140 to form current paths. Additionally, the plurality of cut surfaces 115 may also be welded to the current collecting plates 130 and 140. However, since the cut surface 115 is welded (e.g., laser welded) to the current collecting plates 130 and 140 in a state of being in line contact with the current collecting plates 130 and 140, the effect of increasing a current path due to the cut surface 115 is not great compared to the forming portion 117. On the other hand, since the forming portion 117 is formed by flattening the forming-scheduled portion 117a in the radial direction, the forming portion 117 covers a gap between the uncoated portions 15 spaced apart by the thickness of the separator 13. Since the forming portion 117 is welded to the current collecting plates 130 and 140 in a state of being in surface contact therewith, as an area of the forming portion 117 increases, the current paths of the electrode assembly 110 and the current collecting plates 130 and 140 may be relatively increased. Since the forming portion 117 increases the current paths as much as an area corresponding to the sum of the gaps between the uncoated portions 15, even when the forming portion 117 is applied to a large capacity battery cell 100, it is possible to suppress an increase in heating value of the battery cell 100 and to reduce the probability of ignition.

When the cut surface 115 is exposed instead of being welded to the current collecting plates 130 and 140, an electrolyte impregnation property may increase when the electrolyte is injected into the electrode assembly 110. Although the electrolyte impregnation property may be weakened in a region of the forming portion 117 due to the bending of the uncut piece, since the cut surface 115 is adjacent to the forming portion 117 and complements the impregnation property, there is no problem in impregnation of the electrolyte.

According to the present invention, after the cutting-scheduled portion 115a and the forming-scheduled portion 117a are separated from each other in the uncoated portion 15 in the circumferential direction by the first cutter 210 forming the first cutting line 113 in the axial direction, the second cutter 220 cuts the lower portion of the outer portion 117b of the forming-scheduled portion 117a and the lower portion of the cutting-scheduled portion 115a to form the cut surface 115, and the forming-scheduled portion 117a is pressed in the radially outward direction and flattened to form the forming portion 117. Thus, when the forming portion 117 is formed by pressing the forming-scheduled portion 117a, it is possible to prevent a boundary between the forming portion 117 and the cut surface 115 (a lower side of the first cutting line 113) from being deformed due to tearing or irregular distortion.

In addition, since it is possible to prevent the boundary between the forming portion 117 and the cut surface 115 (the lower side of the first cutting line 113) from being torn or deformed, contact with the electrode sheets 11 and 12 having opposite polarities may be prevented at the torn or deformed region. In addition, by preventing a boundary 16 between the uncoated portion 15 and the coated portion 14 from being torn or deformed, the active material applied on the coated portion 14 may be prevented from being delaminated from the coated portion 14 and a bonding force may be prevented from being weakened. Thus, a reduction in the performance and capacity of the battery cell 100 can be suppressed.

In addition, an edge of the separator 13 may be prevented from being lifted or damaged by a torn or deformed portion of the boundary (the lower side of the first cutting line 113). Therefore, a short circuit between the first electrode sheet 11 and the second electrode sheet 12 may be prevented. In addition, the heating value of the battery cell 100 may be reduced or the possibility of an explosion may be significantly reduced.

In addition, since the forming-scheduled portion 117a is pressed to form the forming portion 117 in a state in which the cut surfaces 115 are removed from both sides of the forming-scheduled portion 117a in the width direction, it is possible to prevent the uncut pieces of the forming-scheduled portion 117a from being obliquely upright and spreading apart due to a spring back phenomenon. Furthermore, by pressing the forming-scheduled portion 117a at a high pressure using the press 230, the forming portions 117 (the uncut pieces of the forming-scheduled portion 117a) may overlap as flat as possible in a state of being pressed against the cut surface 115. Thus, since the forming portion 117 and the cut surface 115 are welded to the current collecting plates 130 and 140 in a state of being in surface contact therewith, a welding cross-sectional area may significantly increase. In addition, as the welding cross-sectional area increases, the cross-sectional area of the current path increases so that there is an advantage of significantly reducing resistance of the battery cell 100. This is because resistance is inversely proportional to a cross-sectional area of a path through which current flows.

The cut surface 115 is formed in a fan shape in the circumferential direction with the core 112 of the electrode cell body 111 as a center. A vertex of the cut surface 115 faces the core 112. Since the cut surfaces 115 are formed in a fan shape, each forming portion 117 may be radially disposed between the cut surfaces 115 with the core 112 as a center. In addition, a width of the outer side of the forming portion 117 may be the same as or greater than a width of the core 112 according to a central angle of the fan-shaped cut surface 115.

The cut surface 115 may have a central angle θ1 ranging from of 60° to 120°. The center angle θ1 is an angle at which two sides diverge from the vertex of the fan-shaped cut surface 115. When the central angle θ1 of the cut surface 115 is 90°, four cut surfaces 115 may each be formed in a cross form in the circumferential direction of the uncoated portion 15. When the central angle θ1 of the cut surface 115 is 60°, six cut surfaces 115 may be formed in the circumferential direction of the uncoated portion 15. When the central angle θ1 of the cut surface 115 is 120°, three cut surfaces 115 may be formed in the circumferential direction of the uncoated portion 15. In the present invention, the central angle θ1 of the cut surface 115 is not limited to the above range. The central angle may be 45°, 30°, or 180°.

The cut surface 115 may be formed by cutting a portion (second cutting line 16a) spaced a predetermined distance H in an axially outward direction from the boundary 16 between the uncoated portion 15 and the coated portion 14. Thus, the second cutter 220 cuts the uncoated portion 15 at a position spaced apart from the coated portion 14 so that the active material applied on the coated portion 14 may be prevented from being delaminated. In addition, even when the uncoated portion 15 is slightly deformed and cut, the coated portion 14 may be prevented from being damaged or deformed.

The above-described central angle θ1 of the cut surface 115 may be appropriately selected by considering a diameter of the electrode cell body 111, a capacity of the battery cell 100, and the like. For example, as the diameter of the electrode cell body 111 increases, the central angle of the cut surface 115 may be formed closer to 60°. This is because, as the diameter of the electrode cell body 111 increases, since the cross-sectional area of the current path is enlarged, which is advantageous for preventing heat generation or ignition, the central angle θ1 of the cut surface 115 is reduced to increase the area of the forming portion 117. In addition, as the capacity of the electrode cell body 111 increases, the central angle θ1 of the cut surface 115 may be formed closer to 60°.

The forming portions 117 may be radially formed with the core 112 of the electrode cell body 111 as a center. When four forming portions 117 are formed in a cross shape, the central angle θ1 of the cut surface 115 becomes 90°. When six forming portions 117 are radially formed with the core 112 as a center, the central angle θ1 of the cut surface 115 becomes 60°. When three forming portions 117 are radially formed with the core 112 as a center, the central angle θ1 of the cut surface 115 becomes 120°. Since the forming portions 117 are radially formed with the core 112 as a center, current paths may be uniformly distributed in the circumferential direction of the electrode cell body 111.

The forming portion 117 may be formed in the form that the forming-scheduled portion 117a of the uncoated portion 15 is flattened in the radially outward direction of the electrode cell body 111. Therefore, the forming portion 117 may be prevented from blocking the core 112 of the electrode cell body 111. The core 112 may become a passage through which the electrolyte is injected or, in some cases, may become a passage into which a welding rod is inserted. Thus, the core 112 may be open in the axial direction.

The outer end portion of the forming-scheduled portion 117a is spaced a predetermined distance L3 (see FIGS. 12 and 13) from an outer circumferential surface of the electrode cell body 111 toward the central portion thereof. In addition, the forming portion 117 has a form in which a predetermined section L3 is removed from the outer circumferential surface of the electrode cell body 111 toward the central portion thereof. Since the outer portion 117b of the forming-scheduled portion 117a is removed by a certain section L3 by the third blade 222, even when the forming portion 117 is folded in the radially outward direction, it is possible to prevent the forming portion 117 from protruding outward from the outer circumferential surface of the electrode cell body 111. Thus, when the battery cell 100 is manufactured, the electrode assembly 110 may be easily inserted inside a battery can 120. In addition, the forming portion 117 may be prevented from being caught on the battery can 120.

A height W2 of the forming-scheduled portion 117a in the axial direction of the electrode cell body 111 is formed to be less than the distance L3 between the outer end portion of the forming-scheduled portion 117a and the outer circumferential surface of the electrode cell body 111. Therefore, even when the forming-scheduled portion 117a is flattened toward the outer circumferential surface of the electrode cell body 111 to form the forming portion 117, it is possible to prevent the outermost portion of the forming portion 117 from protruding outward from the outer circumferential surface of the electrode cell body 111.

The forming portions 117 may be formed in parallel to the radial direction of the electrode cell body 111. The forming portions 117 may be symmetrically formed around the core 112 of the electrode cell body 111. Thus, the forming portions 117 may form current paths having substantially the same area in the radial direction of the electrode cell body 111.

The core 112 may be formed in the central portion of the electrode cell body 111. The core 112 is formed in the form of a hollow passing through the central portion of the electrode cell body 111. A cross-section of core 112 may have a circular shape. Since the core 112 is formed in the form of a hollow, an electrolyte injector (not shown) may inject the electrolyte through the core 112 after the electrode assembly 110 is put into the battery can 120. Thus, an electrolyte injection time may be reduced so that the manufacturing time of the battery cell 100 can be reduced. In addition, when the electrolyte injector is inserted into the core 112, it is possible to prevent the electrode sheets 11 and 12 or the separator 13 in the vicinity of the core 112 from being caught and torn or damaged.

The electrode cell body 111 may be formed in a cylindrical shape. Thus, the electrode cell body 111 may be put into the cylindrical battery can 120 such that an outer surface of the electrode cell body 111 is brought into close contact with an inner surface of the cylindrical battery can 120.

Next, a battery cell manufacturing method according to the present invention will be described.

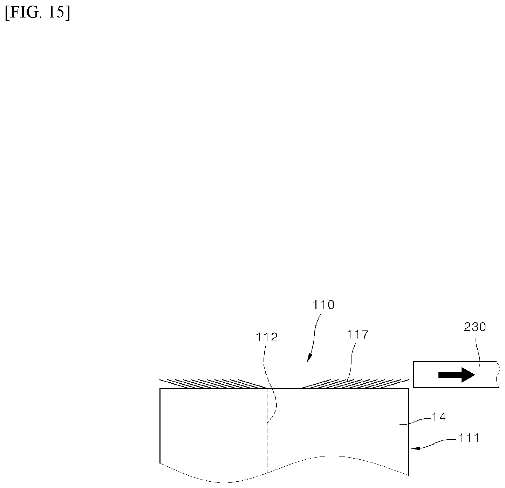

FIG. 15 is a side view illustrating a state in which the press according to the present invention forms the forming portion by bending the forming-scheduled portion in the radially outward direction.

Referring to FIG. 15, the first electrode sheet 11 and the second electrode sheet 12, which are in the form of a sheet (S11), are stacked with the separator 13 disposed therebetween. In this case, a structure in which the first electrode sheet 11, the second electrode sheet 12, and the separator 13 are stacked is the electrode stack 10. In the electrode stack 10, the uncoated portion 15 of the first electrode sheet 11 protrudes to one side of the electrode stack 10 in the width direction, and the uncoated portion 15 of the second electrode sheet 12 protrudes to the other side of the electrode stack 10 in the width direction.

The first electrode sheet 11, the second electrode sheet 12, and the separator 13 are wound in a jelly-roll type (S12). In this case, the electrode stack 10 is wound on a winding rod to form the electrode assembly 110, and then the winding rod is separated from the electrode assembly 110. The core 112 in the form of a hollow is formed in the central portion of the electrode assembly 110, where the winding rod is separated. The core 112 is formed to pass through the electrode assembly 110 in the axial direction. As more of the first electrode sheets 11, the second electrode sheets 12, and the separators 13 are stacked in the electrode stack 10, the time for winding and manufacturing the electrode assembly 110 may be reduced.

The first cutter 210 moves in the axial direction of the battery cell 100 to radially cut the uncoated portions 15 of the first electrode sheet 11 and the second electrode sheet 12 (S13). The first cutting lines 113 are formed in the radially cut portions of the uncoated portions 15. In this case, the cutting-scheduled portion 115a and the forming-scheduled portion 117a are divided based on the first cutting line 113. The cutting-scheduled portion 115a and the forming-scheduled portion 117a are alternately disposed in the circumferential direction of the electrode cell body 111. In this case, the cutting-scheduled portion 115a and the forming-scheduled portion 117a maintain their upright state in the axial direction of the electrode cell body 111.

The second cutter 220 moves in the radial direction of the electrode cell body 111 to form the second cutting line 16a in the uncoated portion 15, which is wound in the circumferential direction, in the circumferential direction. The second cutting line 16a is connected to the first cutting line 113, and thus the outer portion 117b of the forming-scheduled portion 117a and the cutting-scheduled portion 115a, which are surrounded by the first cutting line 113 and the second cutting line 16a, are cut away to form the cut surface 115 in the uncoated portion 15 of the electrode assembly 110 (S14).

A radial length L2-L3 of the forming-scheduled portion 117a in the electrode cell body 111 is formed to be smaller than the length L2 of the first cutting line 113. In this case, the forming-scheduled portion 117a has a form in which a predetermined section L3 is removed from the outer circumferential surface of the electrode cell body 111 toward the central portion thereof. Thus, even if the forming-scheduled portion 117a is folded in the radially outward direction, it is possible to prevent the forming-scheduled portion 117a from protruding outward from the outer circumferential surface of the electrode cell body 111.

The height W2 of the forming-scheduled portion 117a in the axial direction of the electrode cell body 111 is formed to be less than the distance L3 between the outer end portion of the forming-scheduled portion 117a and the outer circumferential surface of the electrode cell body 111. Therefore, when the forming-scheduled portion 117a is flattened toward the outer circumferential surface of the electrode cell body 111 to form the forming portion 117, the outermost portion of the forming portion 117 is flattened on the removed portion of the forming-scheduled portion 117a.

The press 230 presses and flattens the forming-scheduled portion 117a of the uncoated portion 15 in the radially outward direction of the electrode cell body 111 to form the forming portion 117 (S15).

In this case, the plurality of forming portions 117 may be formed such that a plurality of uncut pieces constituting the forming-scheduled portions 117a are sequentially overlapped and flattened. Thus, the forming portion 117 may be formed to be slightly inclined in the axial direction of the electrode cell body 111.

Since the cut surface 115 is laser welded to the current collecting plates 130 and 140 in a state of being in line contact therewith, the cut surface 115 hardly increases the current path. On the other hand, since the forming portion 117 is formed by flattening the forming-scheduled portion 117a in the radially outward direction, the forming portion 117 covers a gap between the uncoated portions 15 spaced apart by the thickness of the separator 13. Since the forming portion 117 is welded to the current collecting plates 130 and 140 in a state of being in surface contact therewith, as an area of the forming portion 117 increases, the current paths of the electrode assembly 110 and the current collecting plates 130 and 140 may be relatively increased. Since the forming portion 117 increases the current paths as much as an area corresponding to the sum of gaps between the uncoated portions 15, even when the forming portion 117 is applied to a large capacity battery cell 100, it is possible to suppress an increase in heating value of the battery cell 100 and to reduce the probability of ignition.

After the cutting-scheduled portion 115a and the forming-scheduled portion 117a are separated from each other in the uncoated portion 15, the cutting-scheduled portion 115a and the outer portion 117b of the forming-scheduled portion 117a are cut to form the cut surface 115, and the forming-scheduled portion 117a is pressed and flattened to form the forming portion 117. Thus, when the forming portion 117 is formed by pressing the forming-scheduled portion 117a, it is possible to prevent a boundary between the forming portion 117 and the cut surface 115 from being deformed due to tearing or irregular distortion.

In addition, an edge of the separator 13 may be prevented from being lifted or damaged by a torn or deformed portion of the boundary. Therefore, a short circuit between the first electrode sheet 11 and the second electrode sheet 12 may be prevented. In addition, the heating value of the battery cell 100 may be reduced or the possibility of an explosion may be significantly reduced.

The cut surface 115 may be formed in a fan shape in the circumferential direction with the core 112 of the electrode cell body 111 as a center. A vertex of the cut surface 115 faces the core 112. Since the cut surfaces 115 are formed in a fan shape, each forming portion 117 may be radially disposed between the cut surfaces 115 with the core 112 as a center.

The cut surface 115 may have the central angle θ1 ranging from of 60° to 120°. For example, when the central angle θ1 of the cut surface 115 is 90°, four cut surfaces 115 may each be formed in a cross form in the circumferential direction of the uncoated portion 15. When the central angle θ1 of the cut surface 115 is 60°, six cut surfaces may be formed in the circumferential direction of the uncoated portion 15. When the central angle θ1 of the cut surface 115 is 120°, three cut surfaces may be formed in the circumferential direction of the uncoated portion 15.

The cut surface 115 may be formed by cutting a portion (the second cutting line 16a) spaced a predetermined distance in an axially outward direction from the boundary between the uncoated portion 15 and the coated portion 14. Thus, the second cutter 220 cuts the uncoated portion 15 at a position (the second cutting line 16a) spaced apart from the coated portion 14 so that the active material applied on the coated portion 14 may be prevented from being delaminated. In addition, even when the uncoated portion 15 is slightly deformed and cut, the coated portion 14 may be prevented from being damaged or deformed.

The forming portions 117 may be radially formed with the core 112 of the electrode cell body 111 as a center. When four forming portions 117 are formed in a cross shape, the central angle θ1 of the cut surface 115 becomes 90°. When six forming portions 117 are radially formed with the core 112 as a center, the central angle θ1 of the cut surface 115 becomes 60°. When three forming portions 117 are radially formed with the core 112 as a center, the central angle θ1 of the cut surface 115 becomes 120°. Since the forming portions 117 are radially formed with the core 112 as a center, current paths may be uniformly distributed in the circumferential direction of the electrode cell body 111.

The forming portion 117 may be formed in the form that the forming-scheduled portion 117a of the uncoated portion 15 is flattened in the radially outward direction of the electrode cell body 111. Thus, the forming portion 117 is prevented from protruding outward from the outer circumferential surface of the electrode cell body 111, so that the electrode assembly 110 may be easily inserted inside the battery can 120 when the battery cell 100 is manufactured. In addition, the forming portion 117 may be prevented from being caught on the battery can 120.

The forming portions 117 may be formed in the radial direction of the electrode cell body 111. The forming portions 117 may be symmetrically formed around the core 112 of the electrode cell body 111.

The first cutter 210 cuts the uncoated portion 15 while being vibrated by the first vibration generator 213. The first vibration generator 213 may include an ultrasonic vibrator. Since the first cutter 210 cuts the uncoated portion 15 while being vibrated, the cutting performance and cutting speed of the uncoated portion 15 can be improved.

The second cutter 220 cuts the uncoated portion 15 while being vibrated by the second vibration generator 223. The second vibration generator 223 may include an ultrasonic vibrator. Since the second cutter 220 cuts the uncoated portion 15 while being vibrated, the cutting performance and cutting speed of the uncoated portion 15 can be improved.

For the above-described processing of the cut surface, processing by the first cutter may be first performed, and then processing by the second cutter may be performed.

A battery cell is manufactured using the above-described electrode assembly will be described.

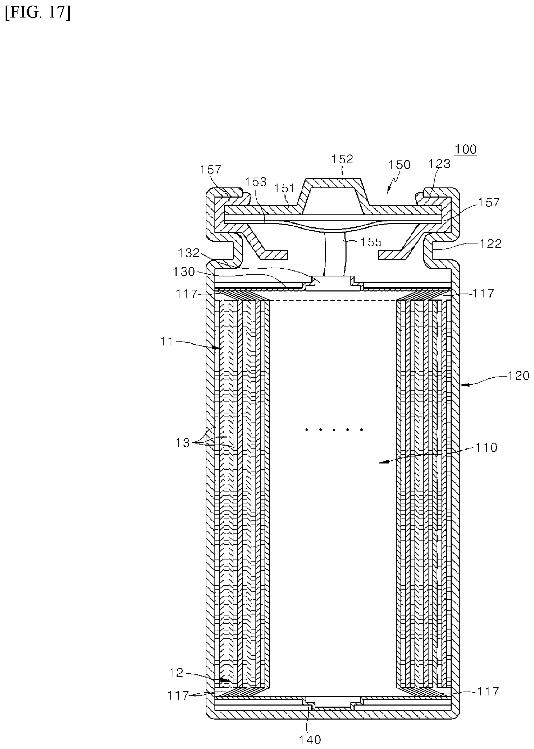

FIG. 17 is a cross-sectional view illustrating an electrode assembly according to the present invention.

Referring to FIG. 17, a battery cell 100 according to the present invention includes an electrode assembly 110, a battery can 120, a sealing cap 150, and a first current collecting plate 130.

The electrode assembly 110 is substantially the same as described above, and thus a description thereof will be omitted.

The electrode assembly 110 is accommodated inside the battery can 120. The battery can 120 is electrically connected to any one of the first electrode sheet 11 and the second electrode sheet 12 to have a first polarity. The battery can 120 may be formed of a conductive material to allow a current to flow. For example, the battery can 120 may be made of a material including a stainless steel material, an aluminum material, or the like. The battery can 120 may be formed in a cylindrical shape with an open end formed at one side thereof.

The sealing cap 150 seals the open end of the battery can 120. The sealing cap 150 is installed to be insulated from the battery can 120. The sealing cap 150 prevents external foreign materials or moisture from infiltrating into the inside of the battery can 120.

The first current collecting plate 130 is electrically connected to the other of the first electrode sheet 11 and the second electrode sheet 12 to have a second polarity. The first current collecting plate 130 may be disposed between the electrode assembly 110 and the sealing cap 150. The first current collecting plate 130 is electrically connected to the sealing cap 150. The first current collecting plate 130 may be welded to an uncoated portion 15 of the other of the first electrode sheet 11 and the second electrode sheet 12. In this case, a forming portion 117 of the uncoated portion 15 may be welded to the first current collecting plate 130 in a state of being in surface contact therewith, and a cut surface 115 of the uncoated portion 15 may be welded to the first current collecting plate 130 in a state of being in line contact therewith. Thus, since a welding cross-sectional area between the uncoated portion 15 and the first current collecting plate 130 increases, a cross-sectional area of the current path increases so that electrical resistance of the battery cell 100 may be significantly reduced. In addition, it is possible to reduce a heating value of the battery cell 100, and to reduce the probability of ignition of the battery cell 100.

The first electrode sheet 11 may be a negative electrode sheet, and the second electrode sheet 12 may be a positive electrode sheet. Alternatively, the first electrode sheet 11 may be a positive electrode sheet, and the second electrode sheet 12 may be a negative electrode sheet.

An electrolyte is injected into the inside of the battery can 120 through the core 112 of the electrode assembly 110.

The electrolyte may be a salt with a structure as A⁺B⁻. Here, A⁺ includes alkali metal cations such as Li ⁺, Na⁺, K⁺, or ions including a combination thereof. In addition, B⁻ includes one or more anions selected from the group consisting of F⁻, Cl⁻, Br⁻, I⁻, NO₃⁻, N(CN)₂⁻, BF₄⁻, ClO₄⁻, AlO₄⁻, AlCl₄-, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂-, (CF₃)₅PF⁻, (CF₃)₆P⁻, CF₃SO₃⁻, C₄F₉SO₃⁻, CF₃CF₂SO₃⁻, (CF₃SO₂) ₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In addition, the electrolyte may be used by being dissolved in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The sealing cap 150 may further include an insulator 157 which covers the first current collecting plate 130 and has an edge interposed between an inner circumferential surface of a support 122 and the first current collecting plate 130. The insulator 157 electrically insulates the sealing cap 150 from the battery can 120.

The insulator 157 may be made of a polymeric resin with an insulating property. For example, insulator 157 may be made of polyethylene, polypropylene, polyimide, or polybutylene terephthalate.

The sealing cap 150 includes a cap plate 151 installed to seal the open end of the battery can 120. The cap plate 151 may be generally formed in the form of a circular plate. An external terminal 152 is formed to protrude outward (the upper portion in FIG. 13) from a central portion of the cap plate 151.

The sealing cap 150 includes a vent plate 153 disposed below the cap plate 151. The vent plate 153 is broken when an internal pressure of the battery can 120 exceeds a preset pressure. The vent plate 153 prevents the battery cell 100 from exploding.

The vent plate 153 and the first current collecting plate 130 are electrically connected by a lead 155. In addition, the vent plate 153 comes into contact with the cap plate 151 to form a part of the current path.

The support 122 is formed to be recessed into the battery can 120 below the open end of the battery can 120. The vent plate 153 and the cap plate 151 are stacked above the support 122.

The insulator 157 is interposed between an inner surface of the support 122 and peripheries of the vent plate 153 and the cap plate 151. The insulator 157 covers the first current collecting plate 130 and has an edge interposed between the inner circumferential surface of the support 122 and the first current collecting plate 130. The insulator 157 forms a part of the sealing cap 150.

A clamping portion 123 is formed at the open end of the battery can 120 to press the cap plate 151 and the insulator 157. The clamping portion 123 is bent into the open end of the battery can 120 to seal between a circumference of the cap plate 151 and the open end of the battery can 120. Since the clamping portion 123 of the support 122 presses and fixes the first current collecting plate 130 and the circumference of the vent plate 153, movement of the first current collecting plate 130 and the vent plate 153 is limited so that assembly stability of the battery cell 100 can be improved. In addition, it is possible to secure the airtightness of the battery can 120 while preventing leaks due to an external impact.

Any one of the first electrode sheet 11 and the second electrode sheet 12 may be electrically connected to the battery can 120 through the second current collecting plate 140. In this case, the second current collecting plate 140 may be welded to the uncoated portion 15 formed in any one of the first electrode sheet 11 and the second electrode sheet 12. The cut surface 115 and the forming portion 117 of the uncoated portion 15 and the second current collecting plate 140 may be welded by a laser. Thus, since a welding cross-sectional area between the uncoated portion 15 and the second current collecting plate 140 increases, a cross-sectional area of the current path increases so that electrical resistance of the battery cell 100 may be significantly reduced. In addition, it is possible to reduce a heating value of the battery cell 100, and to reduce the probability of ignition of the battery cell 100.

In addition, the uncoated portion 15 formed in any one of the first electrode sheet 11 and the second electrode sheet 12 may be directly welded to the inner surface of the battery can 120.

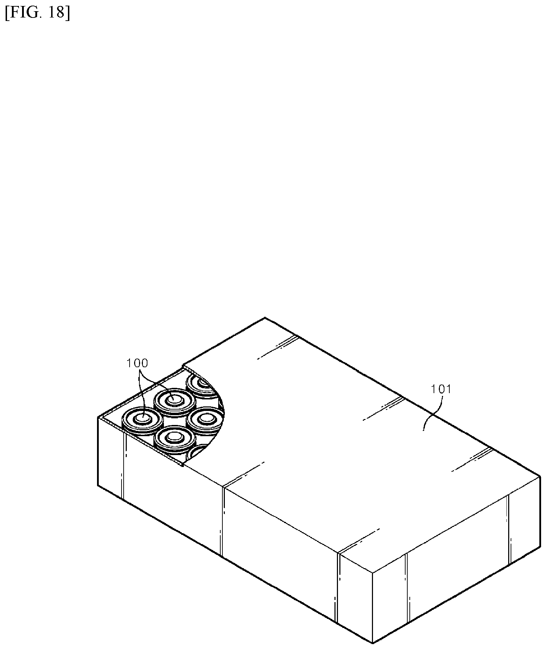

FIG. 18 is a perspective view illustrating a state in which the electrode assembly according to the present invention is accommodated in a pack housing.

Referring to FIG. 18, a battery pack according to an embodiment of the present invention includes an assembly in which cylindrical battery cells 100 are electrically connected and a pack housing 101 accommodating the assembly. The cylindrical battery cell 100 may be any one of the battery cells 100 according to the above-described embodiments. In the drawing, for convenience of illustration, components such as bus bars (not shown) for electrical connection of the cylindrical battery cells 100, cooling units (not shown), and external terminals (not shown) are omitted.

The battery pack may be mounted in a vehicle 300. As one example, the vehicle 300 may be an electric vehicle, a hybrid vehicle, or a plug-in hybrid vehicle. The vehicle includes a four-wheeled vehicle or a two-wheeled vehicle.

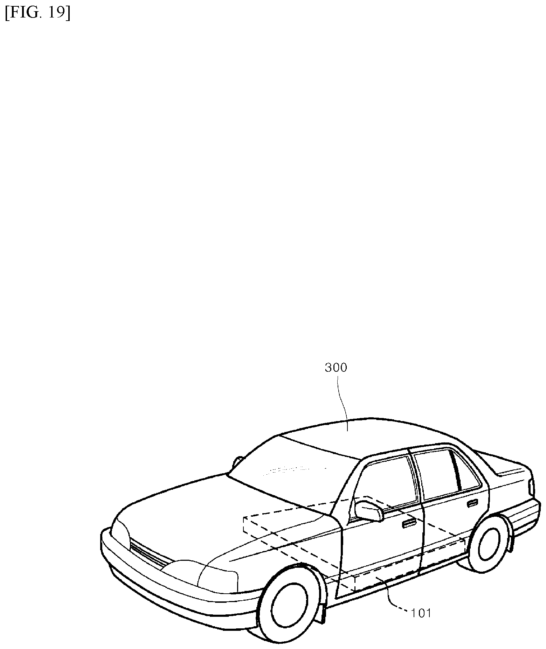

FIG. 19 is a diagram for describing a vehicle including the battery pack according to the present invention.

Referring to FIG. 19, the vehicle 300 according to one embodiment of the present invention includes the battery cell 100 according to one embodiment of the present invention. The vehicle travels by receiving power from the battery cell 100 according to one embodiment of the present invention.

Although the present invention has been described above with reference to the illustrative drawings, it is obvious that the present invention is not limited by the embodiments and drawings disclosed herein, and that various modifications can be made by those skilled in the art within the technical scope of the present invention. In addition, although the operational effects according to the configuration of the present invention have not been explicitly described while describing the embodiments of the present invention, it is natural that the effects predictable by the corresponding configuration should also be recognized.

## Claims

1. A cutting device for cutting at least a portion of an uncoated portion (15) of an electrode assembly (110) including an electrode cell body (111) which is wound in a state in which a first electrode sheet (11) and a second electrode sheet (12), each having a sheet form, and a separator (13) are stacked and which is provided with the uncoated portion (15) not coated with an active material layer, which is provided at an end portion of at least one of the first electrode sheet (11) and the second electrode sheet (12) in a width direction, the cutting device comprising:
a first cutter (210) configured to form first cutting lines (113) in the uncoated portion (15), which extends in an axial direction of the electrode assembly, in the axial direction of the electrode assembly while moving in the axial direction of the electrode assembly (110) and separate a cutting-scheduled portion (115a) and a forming-scheduled portion (117a) based on the first cutting lines (113); and
a second cutter (220) configured to form second cutting lines (16a) in the uncoated portion (15), which is wound in a circumferential direction of the electrode assembly, in the circumferential direction of the electrode assembly while moving in a radial direction of the electrode assembly (110) and cut away an outer portion (117b) of the forming-scheduled portion (117a) and the cutting-scheduled portion (115a), which are surrounded by the first cutting lines (113) and the second cutting lines (16a) by connecting the second cutting lines (16a) to the first cutting lines (113)so that a cut surface (115) is formed in the uncoated portion (15) of the electrode assembly (110).

2. The cutting device of claim 1, wherein the first cutter (210) includes a plurality of first blades (211) radially disposed and extending in the axial direction of the electrode assembly.

3. The cutting device of claim 1, wherein the first cutter (210) includes a first vibration generator (213).

4. The cutting device of claim 1, wherein the second cutter (220) includes:
a second blade (221) formed in a triangular shape with a first side and a second side blades (221a, 221b) to cut the cutting-scheduled portion (115a) in a fan shape; and
a third blade (222) connected to one side of the second blade (221) and having blades (222a, 222b) formed to cut the outer portion (117b) of the forming-scheduled portion (117a).

5. The cutting device of claim 4, wherein the third blade (222) is formed in a triangular shape with a first side and a second side blades (222a, 222b).

6. The cutting device of claim 4, wherein:
the first side blade (221a) of the second blade (221) is formed to be longer than a length of the first cutting line (113);
the second side blade (221b) of the second blade (221) is formed to be shorter than the length of the first cutting line (113); and
the third blade (222) is connected to an outer end portion of the second side blade (221b) of the second blade (221).

7. The cutting device of claim 4, wherein a first side blade (222a) of the third blade (222) is formed with a length equal to a width of the forming-scheduled portion (117a).

8. The cutting device of claim 4, wherein a length of a second side blade (222b) of the third blade (222) is formed to be less than or equal to a length of a first side blade (222a) of the third blade (222).

9. The cutting device of claim 1, wherein the second cutter (220) includes a second vibration generator (223).

10. An electrode assembly manufacturing device comprising:
the cutting device according to claim 1; and
a press (230) configured to form a forming portion (117) by pressing and flattening a forming-scheduled portion (117a) in which the uncoated portion (15) is not cut,
wherein the press (230) is configured to move in a radially outward direction of the electrode cell body (111) to flatten the forming-scheduled portion (117a) of the uncoated portion 15 in the radially outward direction of the electrode cell body (111).

11. A method of manufacturing a battery cell (100), comprising:
stacking and winding a first electrode sheet (11) and a second electrode sheet (12), each having a sheet form, and a separator (13) to manufacture an electrode cell body (111);
forming, by a first cutter (210), first cutting lines (113) in an uncoated portion (15) of one of the first electrode sheet (11) and the second electrode sheet (12) in an axial direction of the electrode cell body (111) while the first cutter (210) moves in the axial direction of the electrode cell body (111) and separating a cutting-scheduled portion (115a) and a forming-scheduled portion (117a) based on the first cutting lines (113);
forming, by a second cutter (220), second cutting lines (16a) in the uncoated portion (15), which are wound in a circumferential direction of the electrode cell body (111), in the circumferential direction of the electrode cell body (111) while the second cutter (220) moves in a radial direction of the electrode cell body (111) and cutting away an outer portion (117b) of the forming-scheduled portion (117a) and the cutting-scheduled portion (115a), which are surrounded by the first cutting lines (113) and the second cutting lines (16a) by connecting the second cutting lines (16a) to the first cutting lines (113) so that a cut surface (115) is formed in the uncoated portion (15) of the electrode assembly (110); and
pressing and flattening, by a press (230), the forming-scheduled portion (117a) of the uncoated portion (15) in a radially outward direction of the electrode cell body (111) to form a forming portion (117).

12. The method of claim 11, wherein a radial length of the forming-scheduled portion (115a) in the electrode cell body (111) is formed to be smaller than a length of the first cutting line (113).

13. The method of claim 11, wherein a height of the forming-scheduled portion (115a) in the axial direction of the electrode cell body (111) is formed to be less than a distance between an outer end portion of the forming-scheduled portion (115a) and an outer circumferential surface of the electrode cell body (111).

14. The method of claim 11, wherein the cut surface (115) is formed in a fan shape in the circumferential direction with a core (112) of the electrode cell body (111) as a center.

15. The method of claim 14, wherein the cut surface (115) has a central angle ranging from 60° to 120°.

16. The method of claim 11, wherein the forming portion (117) is radially formed with a core (112) of the electrode cell body (111) as a center.

17. The method of claim 11, wherein the forming portion (117) is formed such that the forming-scheduled portion (117a) of the uncoated portion (15) is flattened toward an outside of the electrode cell body (111).

18. The method of claim 11, wherein the forming portion (117) is formed in the radial direction of the electrode cell body (111).

19. The method of claim 11, wherein the cut surface (115) is formed by cutting a portion spaced a predetermined distance in an axially outward direction from a boundary (16) between the uncoated portion (15) and a coated portion (14).

20. The method of claim 11, wherein the first cutter (210) cuts the uncoated portion (15) while being vibrated by a first vibration generator (213).

21. The method of claim 11, wherein the second cutter (220) cuts the uncoated portion (15) while being vibrated by a second vibration generator (223).

22. An electrode assembly (110) comprising:
an electrode cell body (111) in which a first electrode sheet (11) and a second electrode sheet (12), each having a sheet form, are stacked with a separator (13) disposed therebetween, the first electrode sheet (11), the second electrode sheet (12), and the separator (13) being wound in a jelly-roll type, uncoated portions (15) not coated with an active material layer are formed at end portions of the first electrode sheet (11) and the second electrode sheet (12) in a width direction;
a plurality of cut surfaces (115) formed by cutting outer portions of forming-scheduled portions (117a) and cutting-scheduled portions (115a) of the uncoated portions (15) in a circumferential direction with a core (112) of the electrode cell body (111) as a center; and
a plurality of forming portions (117) disposed between the cut surfaces (115) and formed by pressing and flattening the forming-scheduled portions (117a) of the uncoated portions (15) toward an outside of the electrode cell body (111).

23. The electrode assembly (110) of claim 22, wherein each cut surface (115) is formed in a fan shape in the circumferential direction with the core (112) of the electrode cell body (111) as the center.

24. The electrode assembly (110) of claim 23, wherein each cut surface (115) has a central angle ranging from 30° to 180°.

25. The electrode assembly (110) of claim 22, wherein each cut surface (115) is formed by cutting a portion spaced a predetermined distance in an axially outward direction from a boundary (16) between the uncoated portion (15) and a coated portion (14).

26. The electrode assembly (110) of claim 22, wherein an outer end portion of the forming-scheduled portion (117a) is spaced a predetermined distance from an outer circumferential surface of the electrode cell body (111) toward a central portion of the electrode cell body (111).

27. The electrode assembly (110) of claim 26, wherein a height of the forming-scheduled portion (117a) in the axial direction of the electrode cell body (111) is formed to be less than a distance between the outer end portion of the forming-scheduled portion (117a) and the outer circumferential surface of the electrode cell body (111).

28. The electrode assembly (110) of claim 22, wherein the forming portion (117) is radially formed with the core (112) of the electrode cell body (111) as a center.

29. The electrode assembly (110) of claim 22, wherein the forming portion (117) is formed such that the forming-scheduled portion (117a) is flattened in a radially outward direction of the electrode cell body (111).

30. The electrode assembly (110) of claim 29, wherein the forming portion (117) has a form in which a predetermined section is removed from the outer circumferential surface of the electrode cell body (111) toward a central portion thereof.

31. The electrode assembly (110) of claim 29, wherein the core (112) is formed in a form of a hollow passing through a central portion of the electrode cell body (111), and
Wherein the forming portion (117) is flattened in the radially outward direction so that the core 112 is not blocked in the axial direction.

32. A battery cell (100) comprising:
the electrode assembly (110) of any one of claims 22 to 31;
a battery can (120) configured to accommodate the electrode assembly (110), the battery can being electrically connected to one of the first electrode sheet (11) and the second electrode sheet (12) to have a first polarity;
a sealing cap (150) configured to seal an open end of the battery can (120); and
a first current collecting plate (130) electrically connected to another of the first electrode sheet (11) and the second electrode sheet (12) to have a second polarity.

33. The battery cell (100) of claim 32, wherein the first current collecting plate (130) is welded to the forming portion (117).

34. A battery pack comprising at least one battery cell (100) of claim 33.

35. A vehicle comprising at least one battery pack of claim 34.
